(19) **Europäisches Patentamt / European Patent Office / Office européen des brevets**

(11) **EP 1 706 975 B1**

(12) **EUROPEAN PATENT SPECIFICATION**

(45) Date of publication and mention
of the grant of the patent:
**02.01.2008 Bulletin 2008/01**

(21) Application number: **04740494.2**

(22) Date of filing: **30.06.2004**

(51) Int Cl.:
***H04L 27/26*** *(2006.01)*　　***H04L 27/34*** *(2006.01)*

(86) International application number:
**PCT/EP2004/007117**

(87) International publication number:
**WO 2005/096579 (13.10.2005 Gazette 2005/41)**

(54) **PEAK REDUCTION IN OFDM USING CLIPPING AND MODIFIED CONSTELLATIONS**

SPITZENWERTVERRINGERUNG FÜR OFDM MITTELS BEGRENZUNG UND GEÄNDERTER KONSTELLATIONEN

REDUCTION DE CRETES POUR MDFO A DECRETAGE ET CONSTELLATIONS MODIFIEES

(84) Designated Contracting States:
**DE GB**

(30) Priority: **12.03.2004 WOPCT/EP2004/002604**

(43) Date of publication of application:
**04.10.2006 Bulletin 2006/40**

(73) Proprietor: **NTT DoCoMo INC.**
**Chiyoda-ku**
**Tokyo 100-6150 (JP)**

(72) Inventor: **SAUL, Andreas**
**80686 Munich (DE)**

(74) Representative: **Schoppe, Fritz et al**
**Schoppe, Zimmermann, Stöckeler & Zinkler**
**Patentanwälte**
**Postfach 246**
**82043 Pullach bei München (DE)**

(56) References cited:
**US-A- 6 128 350**

- **KRONGOLD B S ET AL: "PAR reduction in OFDM via active constellation extension" IEEE TRANSACTIONS ON BROADCASTING IEEE USA, vol. 49, no. 3, September 2003 (2003-09), pages 258-268, XP002303893 ISSN: 0018-9316**

## Description

The present invention is in the field of telecommunications and, in particular, in the field of peak to average reduction in multi-carrier transmission techniques.

Multi-carrier transmission is a promising modulation scheme for e.g. 4th generation mobile communication systems (4G) because it allows to transmit over a broad bandwidth and to achieve high-speed and large capacity throughput performance. One of the problems associated with multi-carrier modulation schemes is an increased peak-to-average power ratio (PAPR) resulting from a super-position of a plurality of frequency signal components in a time domain signal to be transmitted. The problem associated with high signal peaks in a multi-carrier modulation technique results from the fact that a high PAPR causes clipping or bad resolution in digital-to-analogue converters and non-linear distortion in high power amplifiers (HPA), which causes serious out-of-band (OOB) emissions disturbing adjacent signals. Generally, high PAPR makes a signal detection at a receiver difficult and, therefore, leads to an increased bit error rate.

Among other multi-carrier transmission techniques, the orthogonal frequency division multiplexing (OFDM) is frequently used. At a transmitter, an OFDM signal is obtained from assigning a number of spectral values to be transmitted to subcarriers used for transmission, wherein a transmit signal is obtained from an inverse Fourier transform applied to the spectral values. The spectral values are obtained from dividing information values into groups containing a number of information values and mapping the groups of information values onto signal space constellation points in a signal space domain. Therefore, a group of information values is represented by a signal space constellation point having a real part and an imaginary part. The mapping operation is equivalent to modulating the groups of information bits using a modulation technique, for example, a quadrature amplitude modulation (QAM), assigning a group of information values to a signal space constellation point from a set of signal space constellation points associated with the modulation technique.

In the case of OFDM, high signal peaks origin from superposing the subcarriers. The high power amplifier heavily distorts all signal parts that come close to, or exceed saturation. The distortion causes inter-carrier interference (ICI) and the above-mentioned OOB radiation. While ICI disturbs the transmitted signal and degrades the bit error rate (BER), OOB radiation disturbs signals on adjacent frequency bands and should also be avoided.

Known peak reduction techniques are used in order to mitigate the negative effects of nonlinear distortion. Non-distortion techniques like selective mapping (SLM), partial transmit sequences (PTS) and derivatives can achieve a good peak reduction by transmitting only symbols with low peaks. The SLM approach is disclosed in S.H. Müller, R.W. Bäuml, R.F.H. Fischer and J.B. Huber, "OFDM with Reduced Peak-to-Average Power Ratio by Multiple Signal Representation," Annals of Telecommunications, Vol. 52, No. 1-2, pp. 1-9, February, 1997, the PTS approach is disclosed in S. H. Müller and J.B. Huber, "A Comparison of Peak Power Reduction schemes for OFDM," in Proc. Of Globecom. November 1997, pp. 1-5.

A transmission of side information is one problem associated with non-distortion techniques, so that a data structure has to be changed. Known non-distortion techniques require extensive effort at the transmitter in order to find the symbol with the lowest peaks and require additional efforts at every receiver in order to restore the signal.

In order to reduce PAPR, coding techniques, as disclosed in A.E. Jones, T.A. Wilkinson and S.K. Barton, "Block Coding Scheme for Reduction of Peak to Mean Envelope Power Ratio of Multicarrier Transmission Schemes," El. Lett, Vol. 30, No. 25, pp. 2098-2099, December 1994 can be used. Coding techniques use codes, whose codewords have low PAPR. This, however, generally limits the flexibility in transmitter design. Furthermore, if channel codes are designed for low PAPR, same cannot be used anymore in order to optimize system performance by fitting the code for the channel and the transmission scheme. Moreover, for a high number of subcarriers in a case of a multi-carrier transmission technique like OFDM, the code rate of the currently known peak reduction codes must be low in order to achieve a significant PAPR reduction.

Using peak reduction carriers/tones (PRC/PRT) disclosed in E. Lawrey and C.J. Kikkert, "Peak to Average Power Ration Reduction of OFDM Signals Using Peak Reduction Carriers," in Int. Symposium on signal Processing and its applications, August 1999, pp. 737-740, J. Tellado and J.M. Cioffi, "Peak Power Reduction for Multicarrier Transmission," in Mini-Globecom, 1999, optionally in combination with adaptive subcarrier selection (ASuS) disclosed in H. Schmidt and K.-D. Kammeyer, "Reducing the Peak to Average Power Ratio of Multicarrier Signals by Adaptive Subcarrier Selection," in Int. Conference on Universal Personal Communications, January 1998, pp. 933-937, offers some degrees of freedom to reduce PAPR without introducing ICI on the data carriers. However, for a strong reduction of PAPR, many peak reduction carriers are needed corresponding to a significant loss in data rate. ASuS is using only the weakest subcarriers for peak reduction and therefore requires feedback information from the receiver about the channel state information (CSI). However, the more receivers have to be reached, the less probable it becomes to find subcarriers that are weak for all receivers.

Clipping techniques offer a high flexibility, as many of them are basically applicable for any modulation scheme. Whereas clipping and filtering in time domain, as is disclosed in L.D. Kabulepa, T. Pionteck, A. Garcis and M. Glesner, "Design Space Exploration for Clipping and Filtering PAPR Reduction Techniques in OFDM Systems," in Proc. Int.

OFDM-Workshop, Vol. 1, October 2003, pp. 108-112, offers a peak reduction at low implementation costs, repeated clipping and frequency filtering disclosed in J. Armstrong, "Peak-to-Average power reduction for OFDM by repeated clipping and frequency domain filtering," in El. Lett. Vol. 38, No. 5, February 2003, pp. 246-247 allows to remove that part of the out-of-band radiation completely that is introduced by clipping. However, most clipping techniques introduce ICI. This undesirable effect becomes significant when the clipping ratio is chosen low in order to achieve a low out-of-band radiation.

The filtering operation and the peak regrowth that is incorporated with the filtering can be avoided when soft clipping, as disclosed in H.-G. Ryu, B.-I Jin and I.-B. Kim, "PAPR Reduction Using Soft Clipping and ACI Rejection in OFDM Systems," IEEE Trans. On Communications, Vol. 48, No. 1, pp. 17-22, February 2002, peak windowing as disclosed in M. Pauli and H.-P. Kuchenbecker, "On the Reduction of the Out-of-Band Radiation of OFDM-Signals," in Int. Conference on Communications, Vol. 3, 1998, pp. 1304-1308 or peak cancellation techniques as disclosed in M. Lampe and H. Rohling, "Reducing out-of-band emissions due to nonlinearities in OFDM systems, " in Vehicular Technology Conference, Vol. 3, May 1999, pp. 2255-2259 are used. However, this is done at the expense of additional ICI.

Improving the ICI can be done at the transmitter by predistorting the signal as is disclosed in A. Katz, "Linearization: Reducing Distortion in Power Amplifiers," IEEE Microwave Magazine, Vol. 2, No. 4, pp. 37-49, December 2001. This compensates for the amplifier's nonlinearity. However, signal peaks exceeding the amplifier's saturation are still distorted, so that supplementary peak reduction techniques have to be used. Complementarily, it is possible to model the distorted transmitted signal and to consider the limited dynamic range by a Bayesian estimator at the receiver as is disclosed in P. Zillmann, H. Nuszkowski and G.P. Fettweis, "A Novel Receive Algorithm for Clipped OFDM Signals," in Proc. Int. Symp. On Wireless Personal Multimedia Communications, Vol. 3, October 2003, pp. 385-389.

As one further possibility companding techniques as disclosed in X, Wang, T.T. Tjhung and C.S. Ng, "Reduction of Peak-to-Average Power Ratio of OFDM System Using a Companding Technique," IEEE Trans. On Broadcasting, Vol. 45, No. 3, pp. 303-307, September 1999 can be used. They are composed of a transmit processing part that compresses the signal at the transmitter and a receive processing part that expands the signal to the original dynamic range with low complexity. Alternative techniques that have a deeper impact in the receiver's design are decision-aided reconstruction (DAR) as disclosed in D. Kim and G.L. Stuber, "Clipping Noise Mitigation for OFDM by Decision-Aided Reconstruction," IEEE Communications Letters, Vol. 3, No. 1, pp. 4-6, January 1999 or iterative maximum likelihood detection as disclosed in J. Tellado, L.M.C. Hoo and J.M. Cioffi, "Maximum-Likelihood Detection of Nonlinearly Distorted Multicarrier Symbols by Iterative Decoding," IEEE Trans. On Communications, Vol. 51, No. 2, pp. 218-228, February 2003. They require, however, significantly more computational complexity at the receiver.

The active constellation extension (ACE) technique disclosed in B.S. Krongold and D.L. Jones, "PAR reduction in OFDM via Active Constellation Extension," IEEE Trans. On Broadcasting, vol. 49, No. 3, pp. 258-268, September 2003 considers the ICI without any modifications at the receiver. The outer constellation points in the signal space (signal space domain) are extended to minimize the PAPR. After clipping the signal peaks, undesired extension directions in the signal space are set to zero so that the decision boarders are never approached. However, it is not possible to achieve very low OOB radiation and it is effective mainly for small constellation sizes, e.g. for quaternary phase shift keying (QPSK).

The tone injection technique disclosed in J. Tellado and J.M. Cioffi, "Peak Power Reduction for Multicarrier Transmission," in Mini-Globecom, 1999, which belongs to a class of non-distortion techniques, is an alternative to ACE that also extends the signal constellation, but it is more suitable for higher-order constellations. The tone injection results in a higher order signal constellation, e.g. a 16QAM amplitude modulation symbol may be transformed to a 144QAM symbol. This avoids ICI, but the average symbol energy increases and so does the required signal-to-noise ratio (SNR).

In the following, OFDM modulation for transmitting on multiple subcarriers, serving as an example of a multicarrier modulation scheme, will be considered by the way of example only. $d_n(i)$ are the complex data symbols transmitted at time instant i on subcarrier n. The transmitted signal after OFDM modulation

$$s(t) = \sum_{i=-\infty}^{\infty} \sum_{n=0}^{N-1} d_n(i) g_n(t - iT)$$

is composed of the N subcarriers $d_n(i)$, where

$$g_n(t) = g(t) e^{jw_n t}$$

are the transmit filters. For example, raised cosine impulse shapes can be selected for $g(t)$.

For example, the HPA may be represented by Rapp's solid state power amplifier (SSPA) model disclosed in H. Atarashi and M. Nakagawa, "A Computational Cost Reduction scheme for a Post-Distortion Type Nonlinear Distortion Compensator of OFDM Signals," IEICE Trans. On communications, vol. E81-B, No. 12, pp. 2334-2342, December 1998 with amplification characteristic

$$\bar{s}(t) = \frac{Vs(t)}{\left(1 + \left|Vs(t)/A_{SAT}\right|^{2p}\right)^{1/2p}}$$

where $p = 10$, $\bar{s}(t)$ is the amplified signal, V can be considered as being an amplification factor, and

$$P_{SAT} \;=\; A_{SAT}^2$$

is the amplifiers saturation power.

In order to reduce the nonlinear distortion of peaks, the amplifier is driven with an output back-off (OBO). The OBO is defined as the ratio between the amplifier's saturation power and the power of the amplifier's output signal

$$OBO\ \big|_{dB} \stackrel{\Delta}{=} 10\log_{10}\frac{P_{SAT}}{E\left\{\left|\bar{s}(t)\right|^2\right\}}$$

Without any further measures, the OFDM signal may exceed the amplifiers saturation from time to time. In order to reduce the dynamic range of the OFDM signal s(t) clipping techniques can be used to cut peak amplitudes.

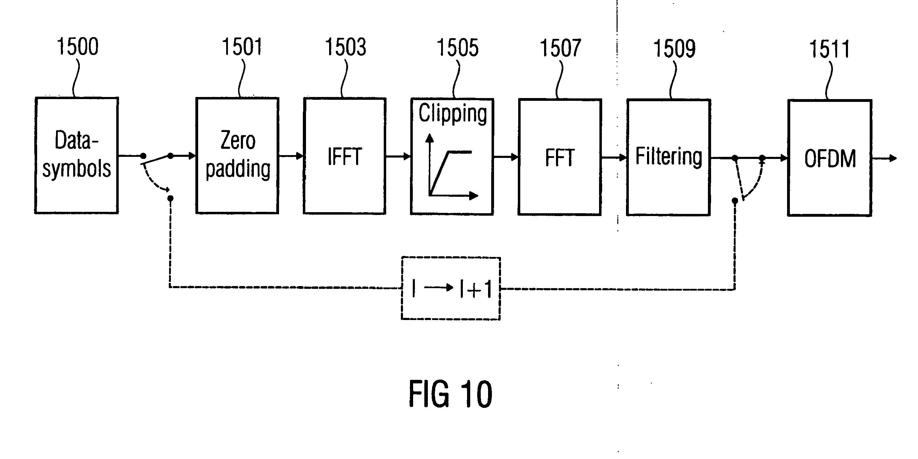

Fig. 10 shows a block diagram of an OFDM transmitter incorporating the clipping approach in order to reduce PAPR.

The transmitter in Fig. 10 demonstrates non-recursive clipping (solid lines), as disclosed in J. Armstrong, "New OFDM Peak-to-Average Power Reduction Scheme," in Vehicular Technology Conference, Vol. 1, Spring 2001, pp. 756-760. Moreover, the transmitter shows the recursive clipping approach depicted with dashed lines.

The transmitter shown in Fig. 10 comprises a data symbol source 1500 having an output coupled to an input of a zero padding block 1501. The zero padding block 1501 is coupled to an inverse fast Fourier transformer (IFFT) 1503. An output of the IFFT is coupled to a clipping block 1505 having an output coupled to a fast Fourier transformer (FFT) 1507. An output of the FFT 1507 is coupled to a filter 1509, the filter 1509 having an output coupled to an OFDM modulator 1511.

Using a recursive clipping technique, a filtered signal provided by the filter 1509 is fed back to the zero padding block 1501.

The data symbols on subcarriers $d^0 \stackrel{\Delta}{=} (d_0, \ldots, d_{N-1})^T$ are first transferred into a time domain signal using the IFFT block 1503. The zero padding before the FFT leads to an oversampling in time domain. Next, the signal is clipped at a clipping level $x_{max}$. A clipping ratio CR is defined by

$$CR\ \big|_{dB} \stackrel{\Delta}{=} 10\log_{10}\frac{x_{max}^2}{E\left\{d^{0H}d^0\right\}}$$

The clipped signal is transformed back into the frequency domain. While the first N elements of the FFT output are the new data symbols that correspond to the amplitude limited time signal, the other part of the output vector contains only intermodulation products that would appear as OOB radiation on the channel. These elements are suppressed by the filtering block 1509 of the system.

The disadvantage of clipping is the error between the original data symbols and the new data vector. This difference is the ICI which has previously been mentioned.

Contrary to the clipping and symbol-by-symbol filtering approach described above, a repeated clipping and frequency domain filtering associated with the recursive clipping is depicted with the dashed lines in Fig. 10. While the clipped signals amplitude is peak reduced, the filtering removes all high frequencies and the peaks regrow. For this reason, it may be of advantage to repeat clipping and filtering. Therefore, the filtered signal is fed back, as is shown in the dashed part of Fig. 10. Although any number of iterations is possible, it has been shown in A. Saul, "Analysis of Peak Reduction in OFDM Systems Based on Recursive Clipping," in Proc. Int. OFDM-Workshop, Vol. 1, September 2003, pp. 103-107 that depending on the system parameters, at most one repetition of clipping and filtering may be of advantage in many cases.

An alternative technique to that described above is the ACE technique previously mentioned. The basic concept behind the ACE technique can be summarised as extending the constellation points in the symbol space (signal space domain) while applying a set of constraints. The constraints prevent symbols to approach the decision boarders in the complex signal space.

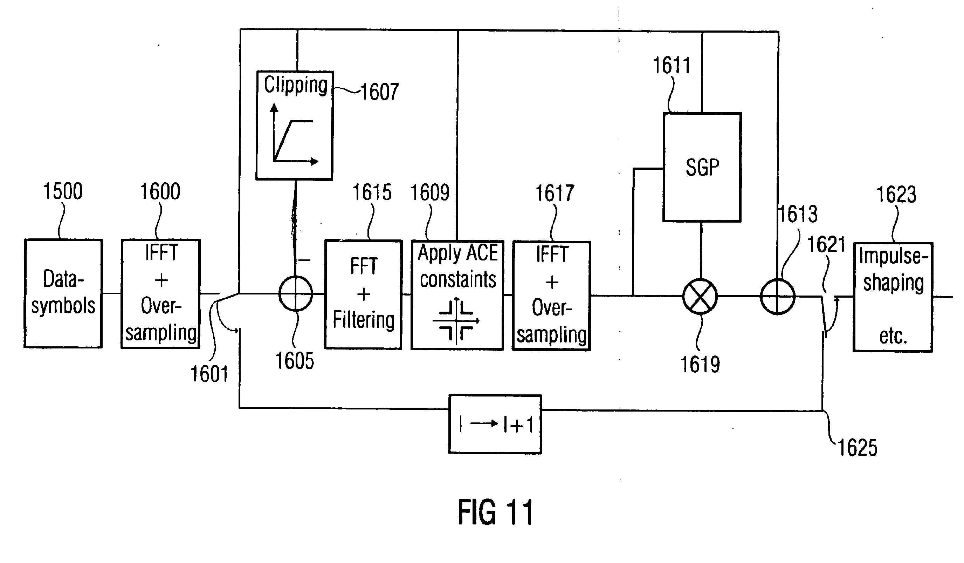

Fig. 11 shows a block diagram of a transmitter using the ACE technique.

The ACE transmitter comprises the data symbol source 1500 coupled to an IFFT 1600 having an output 1601. The IFFT 1600 performs an inverse Fourier transform and oversampling and has the same function as the blocks zero-padding 1501 and IFFT 1503 in Fig. 10. The output 1601 is coupled via a switch 1603 to a subtractor 1605, to a clipping block 1607, to an ACE constraint block 1609, to an SGP block 1611 (SGP = smart gradient project) and to the adder 1613.

An output of the subtractor 1605 is coupled to an FFT 1615 having an output coupled to the ACE constraint block 1609. The FFT 1615 performs a Fourier transform and filtering, which is comparable to the operation of the blocks 1507 and 1509 in Fig. 10. The ACE constraint block 1609 has an output coupled to an IFFT 1617 having an output coupled to a multiplier 1619. The IFFT 1617 performs an inverse Fourier transform and oversampling. The multiplier 1619 has a further input to which an output of the SGP 1611 is coupled. The SGP 1611 has a further input to which the output of the IFFT is coupled. An output of the multiplier 1619 is coupled to an input of the adder 1613. An output of the adder 1613 is coupled via a switch 1621 to an impulse-shaping block 1623.

The ACE transmitter shown in Fig. 11 further comprises a feedback loop 1625 connecting the output of the adder 1613 with the input of the subtractor 1615, when the switches 1603 and 1621 are appropriately switched.

Similar to the other clipping techniques described above, the oversampled time signal provided by the IFFT 1600 is clipped by the clipping block 1607. In order to allow only certain extension directions, the clipped signal portion is transformed into the frequency domain using the FFT 1615, where unwanted extension directions are set to zero in the ACE constraint block 1609. After transforming back into time domain, the $\mu$-fault of the extension vector provided by the IFFT 1617 is added to the original unclipped signal.

The weighting factor $\mu$ is determined by the above-mentioned smart gradient project algorithm in a sub-optimum, but computational efficient way, so that a peak reduction can be achieved. In order to reduce peaks further, the procedure can be repeated several times. In practice, one or two repetitions seem to be reasonable.

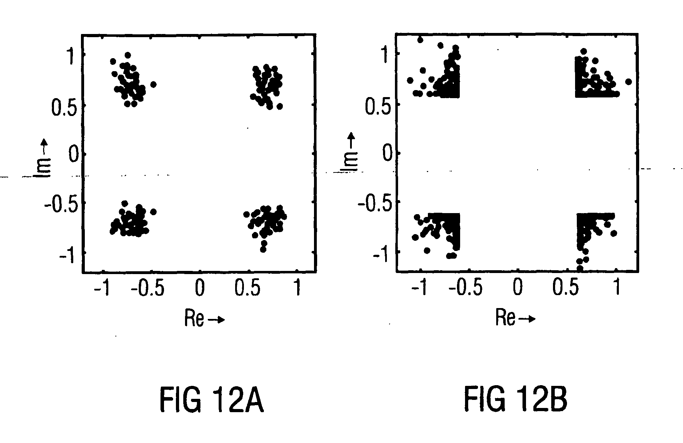

Fig. 12a shows a signal space constellation after recursive clipping at CR = 3.1 dB. Recursive clipping superposes an approximately white Gaussian-noise like signal to the subcarriers and ACE shapes the interference so that no signal points are close to the decision boarders. Fig. 12b illustrates the signal space constellation after ACE for a QPSK signal with CR = 5.0 dB. As is depicted in Fig. 12b, non-acceptable extension directions will be set to zero.

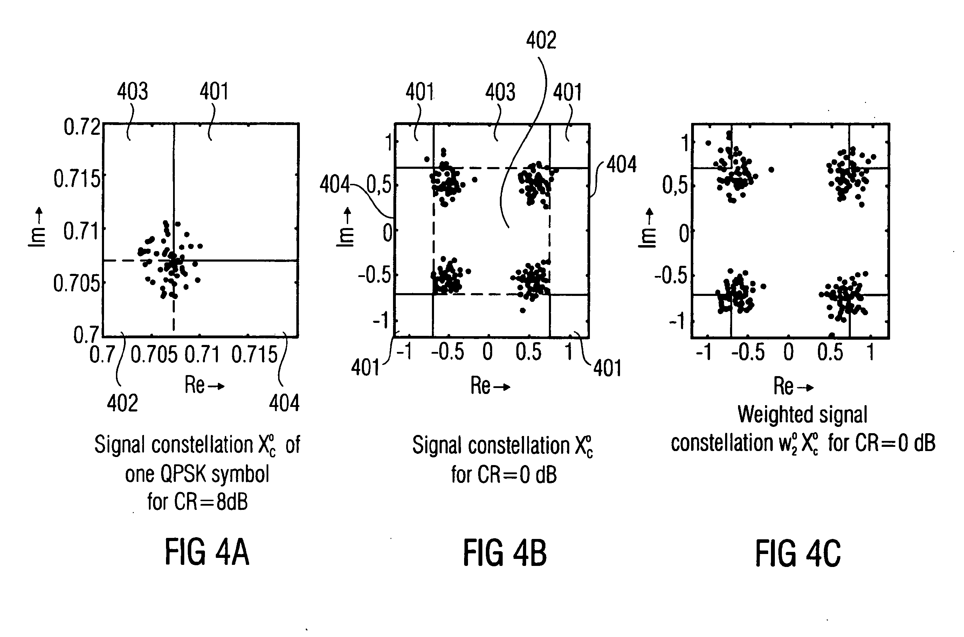

The extension direction is non-acceptable, if the signal point would approach the decision boarders. In reference to Fig. 4a, sub-carriers in the top corner fully contribute to peak reduction. Sub-carriers in the top left corner only contribute with imaginary part, since the real part of the extension vector will be set to zero. Sub-carriers in the bottom right corner only contribute with real part, since the imaginary part of the extension vector will be set to zero.

If, for example, a clipping level is too low, then only a few of signal points remain within the right-angled area, so that only few signal points contribute to PAPR reduction. However, the fewer signal points remain within the allowed area, the more insufficient PAPR reduction can be achieved. Although an increased clipping level would introduce more signal points within the allowable area, the OOB radiation would increase in this case, so that other transmitters on adjacent frequency bands are disturbed.

It is the object of the present invention to provide a concept for generating an error signal with an increased number of sub-carriers in frequency domain contributing to amplitude peak reduction in a transmit signal.

This object is achieved by an apparatus for generating an error signal in accordance with claim 1 or by an apparatus for generating a transmit signal in accordance with claim 23 or by a method for generating an error signal in accordance with claim 24 or by a method for generating a transmit signal in accordance with claim 25 or by a computer program in accordance with claim 26.

The present invention is based on the finding that the number of sub-carriers comprised by the error signal contributing to peak reduction can be increased by a predetermined amount when an error signal is obtained from weighting a distorted portion of an input signal.

For example, the input signal, which may be a time domain signal, comprises a signal peak to be reduced. In order to reduce the signal peak, the error signal is combined with the input signal for generating the transmit signal having a reduced signal peak. In accordance with the present invention, the error signal is firstly generated from the input signal by distorting, so that a noise-like distribution of signal points associated with the sub-carriers of a distorted portion of the input signal results.

More specifically, a time-frequency transform of the input signal comprises a plurality of certain signal space constellation points associated with mapping of a plurality of information values onto certain signal space constellation points associated with the currently-used mapping scheme or, generally, modulation scheme, e.g. QAM. As a result of distorting, the distorted portion of the input signal comprises signal space constellation points at least partially spread over the signal space domain. Some of the signal space constellation points associated with the distorted portion of the input signal are, for example, within the allowable region used by the ACE technique mentioned above. However, a plurality of other signal space constellation points is beyond the allowable region. The ACE technique mentioned above sets the extension directions to zero in order to reduce the probability of a wrong decision at a receiver.

In accordance with the present invention, instead of setting all non-desirable extension direction to zero, the distorted portion is weighted using a weighting factor in order to obtain a distorted signal such that, after weighting, there are fewer non-desirable extension directions. The weighting operation is equivalent to an energy scaling, so that some of the signal space constellation points having reduced energy due to a low clipping ratio are now moved towards the allowable region.

It is the advantage of the present invention that a number of signal space constellation points contributing to a PAPR reduction can be increased without increasing the clipping ratio. Therefore, the clipping ratio can be very low, so that the OOB radiation is reduced and, simultaneously, the number of required signal space constellation points is introduced, so that, in time domain, the resulting distorted signal has a plurality of noise-like components, so that by, for example, superimposing the distorted signal and the input signal, the signal peaks can be reduced.

The present invention provides a general concept for compensating an energy change, e.g. energy loss or energy increase, associated with distorting, for example with reducing a dynamic range e.g. by clipping, which is required for generating the noise-like signal components. Therefore, even very low clipping ratios can be used in order to obtain low OOB radiations without compromising a PAPR reduction performance.

In accordance with a further aspect of the present invention, the weighting factor may be chosen so that a correlation between the input signal and the error signal is minimized. For example, the weighting factor may be determined such that a correlation between the input signal and the error signal is reduced, or such that a correlation between a spectral representation of the input signal and a spectral representation of the error signal is reduced..

In accordance with a further aspect of the present invention, the weighting factor can be determined on a basis of analysis by synthesis approach or on a basis of Monte Carlo simulations, where, for example, an optimum weighting factor de-correlating the input signal and the error signal found by simulation is determined.

In accordance with a further aspect of the present invention, the weighting factor can analytically be determined by minimizing, for example, a correlation between the error signal comprising the weighting factor and the input signal or by minimizing the energy of the error signal.

It is a further advantage of the present invention that, due to reduced correlation between the error signal and the input signal, a peak reduction performance can be increased since the components contributing to peak reduction are ideally not correlated with the input signal. In addition, a reduced correlation between the error signal and the input signal leads to an increased system's performance with respect to e.g. a bit error ratio since, in a receiver, uncorrelated signal components can efficiently be removed and therefore do not affect the subsequent detection process.

Further embodiments of the present invention are described in detail with respect to the following Figs. in which:

Fig. 1        shows a block diagram of an apparatus for generating an error signal from an input signal in accordance with a first embodiment of the present invention;

Fig. 2        shows a block diagram of an apparatus for generating an error signal from an input signal in accordance with a further embodiment of the present invention;

Fig. 3        shows bit error probabilities diagrams in a signal space domain;

Figs. 4a-4b        show distributions of signal space constellation points;

Fig. 5        shows a block diagram of an apparatus for generating a transmit signal from an input signal in accordance with a first embodiment of the present invention;

Fig. 6        shows a block diagram of an apparatus for generating an error signal from an input signal in accordance with a further embodiment of the present invention;

Fig. 7          shows a block diagram of an apparatus for generating a transmit signal from an input signal in accordance with a further embodiment of the present invention;

Fig. 8          shows a distribution of signal space constellation points;

Figs. 9a-9h     show performance comparison results;

Fig. 10         shows a block diagram of a conventional PAPR approach;

Fig. 11         shows a block diagram of a conventional ACE approach; and

Figs. 12a-12b   show distributions of signal space constellation points.

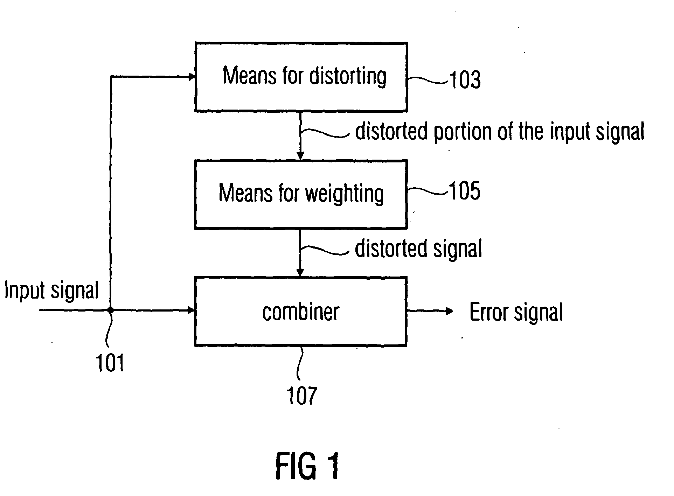

Fig. 1 shows a block diagram of an apparatus for generating an error signal from an input signal in accordance with a first embodiment of the present invention.

The apparatus shown in Fig. 1 comprises an input 101 for inputting the input signal. The input 101 is coupled to an input of a means 103 for distorting. The means 103 for distorting has an output coupled to a means 105 for weighting having an output coupled to an input of a combiner 107. The combiner 107 has a further input to which the input 101 is coupled and an output for providing the error signal.

The error signal provided by the apparatus shown in Fig. 1 can be used for generating a transmit signal having reduced amplitude peaks when compared with the input signal, i.e. having a reduced PAPR, by the way of example only.

The means for distorting 103 is operative for distorting the input signal in order to obtain a distorted portion of the input signal. For example, the means for distorting is operative for amplitude limiting the input signal. Alternatively, the means 103 for distorting may be configured for weighting the input signal with a limiting function, so that the amplitude of the input signal is limited in accordance with an amplitude-limiting curve provided by the limiting function. Furthermore, the means for distorting may be operative for clipping the input signal.

Moreover, the means for distorting may be formed for reducing the dynamic of the input signal, e.g. a dynamic range, by. e.g. hard limiting, soft limiting (clipping), soft clipping, compressing or applying other peak reduction techniques or a combination thereof.

Due to distorting, the distorted portion of the input signal may suffer from an energy change, e.g. an energy loss, since, for a case of amplitude limiting, an amplitude limiting level is smaller than a highest peak amplitude contained by the input signal. In order to at least partly compensate for the energy change, the means 105 for weighting is configured for weighting the distorted portion with a weighting factor, which may be greater than 1 for the case of an energy loss associated with distortion, or smaller than 1 for the case on an energy increase associated with distortion, to obtain a distorted signal to be combined with the input signal by the combiner 107 to generate the error signal. However, the input signal can be distorted such that the distorted portion has an increased energy. In this case, the weighting factor may be smaller than one.

The means 105 for weighting may comprise a multiplier for multiplying the distorted portion of the input signal by the weighting factor. This multiplication can be performed in time domain, wherein the multiplier is operative for multiplying the distorted portion of the input signal, which, in this case, is a time domain signal, by the weighting factor. Alternatively, the multiplication can be performed in frequency domain. In this case, the distorted portion of the input signal is transformed into frequency domain using, for example, a Fourier transformer and the spectral values of the distorted portion of the input signal are multiplied by the weighting factor, which is, preferably, the same for the set of spectral values associated with the Fourier transform of the distorted portion or the input signal. Preferably, the weighting factor depends on the energy change associated with the distortion.

The distorted signal provided by the means 105 for weighting is combined with the input signal provided via the input 101 in order to obtain the error signal. The combiner 107 may comprise a subtractor for determining a difference between the input signal and the distorted signal to obtain the error signal. For example, the distorted signal is subtracted from the input signal. Alternatively, the input signal may be subtracted from the distorted signal. Since a subtracting operation can be performed using an adder and an inverter, the subtractor may comprise an inverter for inverting, for example, the distorted signal and an adder for adding the input signal and the inverted version of the distorted signal, or vice-versa.

If the input signal and the distorted signal are combined in time domain, then the error signal may be a time domain signal or a frequency domain signal. In order to obtain a frequency domain error signal, the combiner 107 may further comprise a time-to-frequency transformer, for example, a Fourier transformer for transforming a signal provided by the subtractor into a frequency domain in order to obtain the error signal in frequency domain.

In accordance with a further aspect of the present invention, the combiner may be operative for combining frequency domain signals. If only one of the signals provided to the combiner 107 is a time domain signal and the other signal is a frequency domain signal, then the combiner 107 may comprise a time frequency transformer, for example, a Fourier transformer, for transforming the time domain signal into frequency domain. If both signals, i.e. the input signal and the distorted signal are time domain signals, then the combiner 107 may comprise a first time frequency transformer for providing a spectral representation of the input signal, a second time frequency Transformer for providing a spectral representation of the distorted signal and a subtractor for determining a difference between the spectral representation of the input signal and the spectral representation of the distorted signal to obtain the error signal. In this case, the error signal is automatically provided in frequency domain. If, however, a time domain error signal is required, then the combiner may further comprise a frequency-time transformer, for example, an inverse Fourier transformer for transforming the error signal into time domain.

Instead of using two time-to-frequency transformers, the combiner 107 may comprise only one Fourier transformer for providing the spectral representation of the input signal and the spectral representation of the distorted signal since a Fourier transform can sequentially be performed.

The weighting factor used by the means 105 for weighting can be chosen such that the energy change introduced by the means 103 for distorting is completely compensated. However, the weighting factor can be chosen such that the energy change is only partially compensated. The weighting factor may be chosen in dependence on an operation associated with the distortion amount introduced by the means 103 for distorting since this operation usually is known, even if it varies over time.

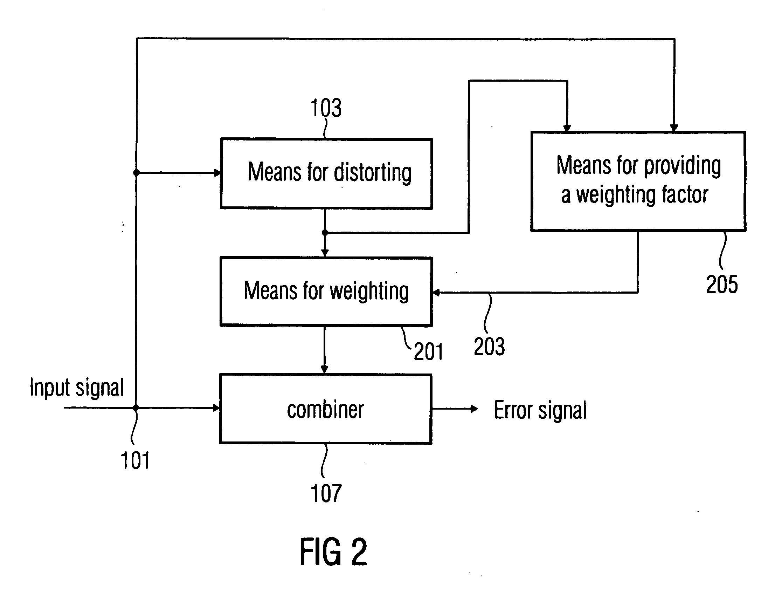

Similar to the embodiment of Fig. 1, the apparatus shown in Fig. 2 comprises means 201 for weighting which is coupled between the means 103 for distorting and the combiner 107. The means 201 for weighting comprises a further input 203 for receiving the weighting factor.

The apparatus further comprises means 205 for providing the weighting factor having a first input coupled to the output of the means 103 for distorting and a second input coupled to the input 101 of the inventive apparatus.

As is shown in Fig. 2, the means 201 for weighting receives the weighting factor which is provided by the means 205 for providing same. For example, the means 205 for providing the weighting factor is formed for calculating the weighting factor from an energy ratio between an energy of the input signal and an energy of the distorted portion of the input signal. Alternatively, the means 205 for providing the weighting factor may be configured for calculating the weighting factor from a power ratio between a power of the input signal and a power of the distorted portion of the input signal. The calculation of the weighting factor will be addressed later in detail.

In accordance with a further aspect of the present invention, the means 205 for providing a weighting factor may be configured for determining the weighting factor using the input signal and the error signal so that, for example, a cross correlation between the input signal and the error signal is minimized. For example, the means 109 for determining the weighting factor may be configured for determining the weighting factor using, e.g., statistical minimization methods, like, for example, the least mean squares approach.

The means 205 for providing the weighting factor may adaptively determine the weighting factor for each input signal, i.e., for each symbol. In accordance with a further aspect of the present invention, the means 109 for determining may be configured for determining the weighting factor once for a transmission session.

For example, the means 205 for providing the weighting factor is formed for calculating the weighting factor from a product between the input signal and the distorted portion, or from an expectation value for the product between the input signal and the distorted portion.

In accordance with a further aspect of the present invention, the means 205 for providing the weighting factor may be configured for determining the weighting factor from a minimization of a cross-correlation between the input signal and the error signal or from a minimization of a cross-correlation between a spectral representation of the input signal and a spectral representation of the error signal. In accordance with a further aspect of the present invention, the means 205 for providing may be configured for determining the weighting factor by minimizing an energy of a spectral representation of the error signal, wherein the error signal, inherently, comprises the weighting factor. Preferably, the means 205 for providing may be configured for determining an expectation value for the weighting factor from a product between the input signal and the complex conjugate distorted portion, or from an expectation value for the product between the input signal and the complex conjugate distorted portion. It is to be noted that, when complex quantities are considered, a product is between a first vector and a conjugate transposed second vector. Nevertheless, the product is based on the first vector and the second vector

In accordance with a further aspect of the present invention, the means 205 for providing may be configured for determining the weighting factor from a real part of the product between the input signal and the distorted portion, or from a real part of the expectation value for the product between the input signal and the distorted portion. An uncoded multicarrier transmission on N sub-carriers over an AWGN (AWGN = Additive White Gaussian Noise) channel is assumed by the way of example only. In the following, the index prime (') stands for a real part of a variable whereas double prime ('') denotes an imaginary part. Firstly, a signal of only one sub-carrier is considered so that the index n can be dropped for the sub-carrier number in the equations for the sake of notational simplicity.

On the considered sub-carrier the complex QAM symbol

$$d = d' + jd'', \quad d', d'' \in R$$

is sent with energy

$$\tilde{E}_s = d'^2 + d''^2 \quad .$$

For peak reduction the complex interference term

$$\Delta d = \Delta d' + j\Delta d'', \qquad \Delta d', \Delta d'' \in R$$

is added at the transmitter. The energy of the interference is

$$\begin{aligned}\Delta \tilde{E}_s &= \left(d' + \Delta d'\right)^2 + \left(d'' + \Delta d''\right)^2 - \tilde{E}_s \\ &= \Delta d'^2 + \Delta d''^2 + d'\Delta d'' + d''\Delta d'\end{aligned} \quad .$$

The peak reduced signal

$$S = d + \Delta d$$

is then transmitted over the equivalent baseband frequency domain AWGN channel where noise $N_{AWGN}$ with power $2N_0 f_s$ is superposed. $f_s$ is a sampling rate of the system. If there should be some non-linear distortion of the signal, e.g. caused by the HPA, this can be approximately viewed as AWGN by the receiver and shall be included in the noise power No. The received sub-carrier

$$R = S + N_{AWGN}$$

is then decided at the detector.

Naturally, the bit error probability on the sub-carrier depends on the signal constellation. Although the following derivations can be performed for any signal constellation, in the following Gray-mapped 4QAM is considered by the way of example only, where the real part transmits the first bit and the imaginary part transmits the second bit of the symbol. In this embodiment, a signal space constellation point transmits, therefore, two bits. In this case, the probability that for the sent bit $S'=d'+\Delta d'$ the received bit $R'$ is not detected (decided), correctly is

$$\Pr\left(R' < 0 \,|\, S' = d' + \Delta d'\right) = \int_{-\infty}^{0} \frac{1}{\sqrt{\pi N_0}} e^{-\frac{(R' - d' - \Delta d')^2}{N_0}} \, dd$$

$$= \frac{1}{2} \operatorname{erfc} \sqrt{\frac{(d' + \Delta d')^2}{N_0}}$$

and correspondingly, if $S'=-(d'+\Delta d')$ has been sent. The bit error probability $P'_b$ for $d'$ and the bit error probability $P''_b$

and d'' are

$$P_b' = \frac{1}{2}\,\mathrm{erfc}\sqrt{\frac{(d' + \Delta d')^2}{N_0}}, \quad P_b'' = \frac{1}{2}\,\mathrm{erfc}\sqrt{\frac{(d'' + \Delta d'')^2}{N_0}}$$

In the following, all sub-carriers will be considered, i.e. the index n is used to indicate the carrier number. If every sub-carrier is distributed by a term $\Delta d_n$, then the total energy of the OFDM symbol is

$$E_s = N\widetilde{E}_s + \sum_{n=0}^{N-1} \Delta\widetilde{E}_{s,n} \quad .$$

The bit error probability on each carrier is

$$P_{b,n} = \frac{P_{b,n}' + P_{b,n}''}{2} \quad .$$

With the above equations, the overall bit error probability is

$$P_b = \frac{1}{N}\sum_{n=1}^{N} P_{b,n}$$

$$= \frac{1}{4N}\sum_{n=0}^{N-1}\left( \mathrm{erfc}\sqrt{\frac{E_s}{N_0}\frac{(d_n' + \Delta d_n')^2}{N\widetilde{E}_s + \sum_{n=0}^{N-1}\Delta\widetilde{E}_{s,n}}} + \mathrm{erfc}\sqrt{\frac{E_s}{N_0}\frac{(d_n'' + \Delta d_n'')^2}{N\widetilde{E}_s + \sum_{n=0}^{N-1}\Delta\widetilde{E}_{s,n}}} \right)$$

In order to find an advantageous distribution of the ICI $\Delta d_n$, a dependency on the error probability $P_b$ should, preferably, be visualized. To do so, it is useful to simplify the scenario. For example, a number of variables appearing in the above equation can be reduced by making an approximation that allows ICI only on single sub-carriers, i.e. $\Delta d_n = 0$ for all sub-carriers except one. By doing so, the following bit error probability of the OFDM signal with one disturbed carrier is obtained

$$P_b = \frac{1}{2N}\left( \frac{1}{2}\,\mathrm{erfc}\sqrt{\frac{E_s}{N_0}\frac{(d' + \Delta d')^2}{N\widetilde{E}_s + \Delta\widetilde{E}_s}} + \frac{1}{2}\,\mathrm{erfc}\sqrt{\frac{E_s}{N_0}\frac{(d'' + \Delta d'')^2}{N\widetilde{E}_s + \Delta\widetilde{E}_s}} \right.$$

$$\left. + (N-1)\mathrm{erfc}\sqrt{\frac{E_s}{N_0}\frac{\widetilde{E}_s}{N\widetilde{E}_s + \Delta\widetilde{E}_s}} \right)$$

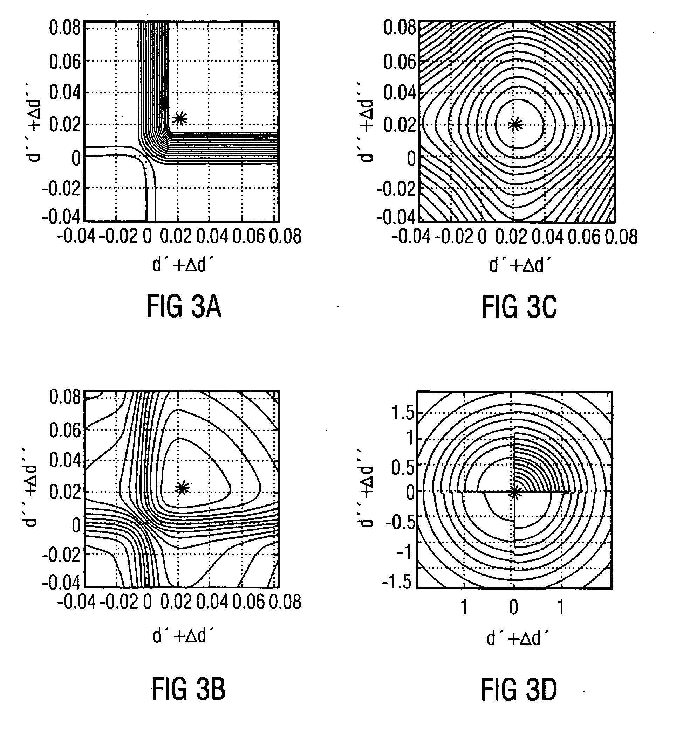

Fig. 3a shows a graphical representation of the above equation for N = 1024 sub-carriers and $E_b/N_0$=10dB with a transmitted QPSK symbol WLOG $d=(1+j)/\sqrt{2}$. A location of the undistorted QPSK symbol $\Delta d$=0 is marked with a star. In other words, the contour plots of the bit error probability determine areas (regions) in the signal space domain associated with resulting bit error probabilities.

In Figs. 3b and 3c, $E_b/N_0$=5dB and $E_b/N_0$=0dB is used as parameter, respectively.

Fig. 3d shows the same curves as Fig. 3a for $E_b/N_0$=10dB in a larger scale, i.e. for higher distortion $\Delta d$. The contour lines show locations of the same bit error probability, the x-axis and the y-axis indicate the real part d'+$\Delta d'$ and

the imaginary part $d''+\Delta d''$ of the distorted QPSK symbol, respectively.

In order to find an interpretation of the contour plots discussed above, two opposite effects that the distortion $\Delta d$ has on the error rate should be considered. On the one hand, if the 4QAM symbol, which corresponds to the QPSK symbol, approaches the decision borders, a probability of a wrong decision of this specific sub-carrier increases. On the other hand, the energy that is spent for the distorted sub-carrier can become smaller so that all other sub-carriers transmit with slightly more energy in order to fit the given $E_s/N_0$, and the error probability of the other sub-carriers improves. An analogous argumentation can be done for the case that the distortion $\Delta d$ leads away from the decision borders. In that case, the error probability of the effected sub-carrier decreases, whereas the error probability of the other sub-carriers becomes slightly worse.

If the channels noise power is weak, which case is depicted in Fig. 3a by the way of example, then the effects of the increased bit error probability for the distorted sub-carrier dominate the total error rate. Therefore, it is advantageous to avoid sub-carriers to come too close to the decision borders. If there is a need to transmit at low $E_s/N_0$ on the other hand, it is also important not to waste too much energy $\tilde{E}_s$ for the distorted sub-carrier as is shown for example in Fig. 3c, and a more circular distribution of the distortion is advantageous. As can be seen in Fig. 3d, even for a relatively high $E_s/N_0$ there is a limit for the distortion $\Delta d$.

The inventive peak reduction technique exploits the fact that the ICI can be shaped in such a way that all distorted sub-carriers are (approximately) located on or inside the regions (areas) determined by the curves shown in Figs. 3a to 3d. Simultaneously, a degradation of the receiver's bit error rate can be limited.

In the following, the active constellation extension technique mentioned above will be considered in detail.

As is depicted in Fig. 11, the clipped or limited signal $\boldsymbol{x_c^\ell}$ is subtracted from the unclipped input signal $x^\ell$ in order to form the clipped signal portion

$$c_c^\ell = x^\ell - x_c^\ell.$$

The clipped signal portion of the factor L oversampled signal is transformed into frequency domain, and at the same time it is filtered. This is done by multiplication with a Fourier matrix of size NxNL, which has the elements

$$F_{m,n}^z \overset{\Delta}{=} e^{-j2\pi\frac{m,n}{N}}.$$

Hereby, the following vector is obtained

$$C_c^\ell = F_{m,n}^z c_c^\ell,$$

containing the filtered clipped signal portion in frequency domain.

As has been mentioned above, the subtraction can also be performed in frequency domain, where two FFT and filter blocks are used in order to transform the clipped signal

$$X_c^\ell = F_{m,n}^z x_c^\ell$$

and the unclipped signal

$$X^\ell = F_{m,n}^z x^\ell$$

separately.

For a moment, it will be assumed in the following that the inventive weighting factor $w^\ell$ is one, wherein l denotes a number of the input signal, i.e. the input signal is the 1-th input signal. In frequency domain, the following result is obtained

$$C_c^\ell \;=\; X^\ell \;-\; X_c^\ell$$

Figs. 4a and 4b show signal space constellation points associated with the clipped signal $X_c^0$ for a clipping ratio of 8 dB and 0 dB (one QPSK symbol). As can be seen, for high clipping ratios a couple of sub-carriers can be found within an area 401 that can be used for peak reduction (dots in the outer corners). Contrary thereto, for low clipping ratios most sub-carriers correspond to an extension direction that is not allowed. According to the known ACE algorithm, all non-acceptable extension directions are set to zero and will, therefore, not contribute to peak reduction. More specifically, Sub-carriers in the area 401 fully contribute to peak reduction. Sub-carriers in the area 402 do not contribute to peak reduction. Sub-carriers in the area 403 only contribute to peak reduction with imaginary part, since the real part of the extension vector will be set to zero. Sub-carriers in the area 404 only contribute with real pert, since the imaginary pert of the extension will be set to zero.

However, a low clipping ratio is desirable, if a low OOB radiation should be achieved. As a result, the known ACE technique fails to achieve very low OOB radiation.

As can be seen from Fig. 4b, the reason for the problems associated with low clipping ratios is the reduced power of the clipped and filtered signal. In order to compensate for the power loss, the inventive weighting factor $w^\ell$ is introduced. The weighting factor may be used for compensation of the power loss

$$c_c^\ell = x^\ell - w^{(l)} x_c^\ell \; .$$

An alternative interpretation of the inventive weighting factor is that the clipped signal portion $c_c^\ell$ (distorted signal portion) should become uncorrelated to $x_c$, i.e.

$$E\{c_c^\ell x^{\ell H}\} = 0 \; .$$

For a non-zero correlation value, the extension vector $\mu^{(l)} c^\ell$ is biased by the original symbol $x^l$, which has high peaks. Hence, also the bias has high peaks which are not reduced.

For a high number N of uncorrelated subcarriers, the input vector $x^l$ is a Gaussian stochastic process at least for the first iteration. Furthermore

$$E\{x^\ell\} = 0 \; ,$$

then the clipped signal can be expressed as

$$x_c^\ell = \alpha^{(l)} x^\ell + n_c^l$$

wherein $n_c^l$ is the noise component and $\alpha^{(l)}$ is a constant depending on the clipping ratio and the statistical properties of $x^l$, and $n_c^l$ is uncorrelated to $x^l$, i.e.

$$E\{n_c^l x^{\ell H}\} = 0 \; .$$

Using the above equations, the following is obtained for the correlation

$$E\{n_c^l x^{lH}\} = (1 - \alpha^{(l)}) E\{x^l x^{lH}\} \ .$$

This term can only be zero, if $\alpha^{(l)}=1$. In order to achieve this property, the weighting factor can be chosen as follows

$$w^l = \frac{1}{\alpha^{(l)}} \ .$$

In other words, the above weighting factor is chosen such that the clipped signal portion and the input signal become uncorrelated.

An further choice of the weighting factor that perfectly compensates the power loss is

$$w_1^\ell = \sqrt{\frac{X^{\ell H} X^\ell}{X_c^{\ell H} X_c^\ell}} = \sqrt{LN \frac{x^{\ell H} x^\ell}{X_c^{\ell H} X_c^\ell}}$$

wherein $X^l$ denotes an l-th input signal, $X_c^\ell$ denotes a 1-th distorted portion of the input signal, both in frequency domain.

Moreover, $x^1$ denotes the 1-th input signal in time domain. The operator H denotes transposition and conjugation.

In order to determine the above-weighting factor, one additional FFT is needed for each iteration in order to determine $X_c^\ell$.

This corresponds to an increase of a computational complexity with respect to the Fourier transform operation by approximately 50%. In order to avoid the additional complexity, the power loss due to the filtering operation can be neglected. In this case, the weighting factor can be calculated in time domain as

$$w_2^\ell = \sqrt{\frac{x^{\ell H} x^\ell}{x_c^{\ell H} x_c^\ell}} \ .$$

The expected power loss due to filtering is

$$\frac{E\{w_1^{(l)}\}(l)}{E\{w_2^{(l)}\}(l)} = \sqrt{LN \frac{E\{x_c^{lH} x_c^l\}}{E\{X_c^{\ell H} X_c^\ell\}}} \ .$$

Therefore, the weighting factor

$$w_3^\ell = \frac{E\{w_1^{(l)}\}(l)}{E\{w_2^{(l)}\}(l)} = \sqrt{LN \frac{E\{x_c^{lH} x_c^l\} x^{lH} x^l}{E\{X_c^{\ell H} X_c^\ell\} x_c^{lH} x_c^l}}$$

comes closer to the above expression for $w_1^\ell$ for nearly the same computation costs. In the above equations, $x_c$ denotes the clipped signal.

A further reduction in computational complexity is possible when an expectation value of the energy ratios described above instead of calculating the weighting factor for each symbol is calculated from the following equation

$$w_4^\ell = E\{w_1^\ell\}(\ell) = \sqrt{LN \frac{E\{x^{\ell H} x^\ell\}(\ell)}{E\{X_c^{\ell H} X_c^\ell\}(\ell)}} \ .$$

For very low clipping ratios, the above weighting factors can be increased by introducing, for example, a constant factor k[1]

$$w_5^\ell = k^\ell w_{1,2,3,4}^\ell \ .$$

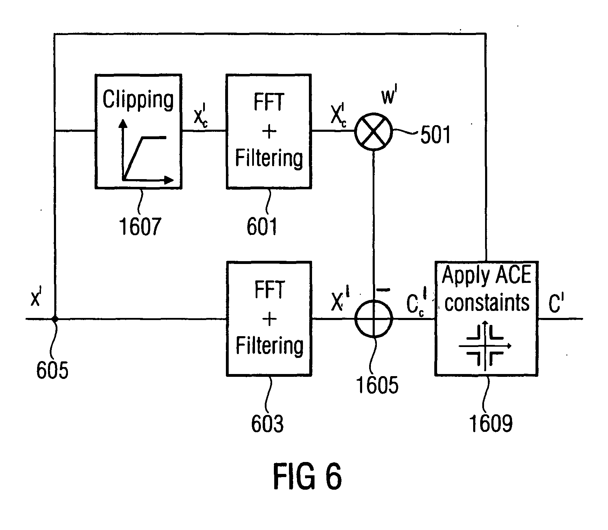

Using the additional constant factor k[1] > 1, additional sub-carriers can be utilized for peak reduction, and for k[1] < 1 less sub-carriers are used. An optimum value for k[1] depends on the chosen clipping ratio respectively a target PSD. Moreover, the weighting factor may be chosen depending on an iteration number 1. In the following, further inventive weighting factors will be described. Let us examine the ACE technique again a little bit closer. For easier notation we will drop the iteration index $\ell$ for all vectors in the following equations. The subtraction to determine the clipped signal portion can also be done in frequency domain. As depicted in Fig. 6 two FFT and filter blocks are needed to transform the clipped signal $X_c = F^z x_c$ and the unclipped signal $X = F^z x$ separately. For the moment we assume the variable $w^{(\ell)}$ in Fig. 6 to be one. Therefore, we will get the same $C_c = X - X_c$. An element for indices m, n of $F^z$ is given by $e^{-j2\pi mn/N}$.

Figs. 4a and 4b visualize the clipped signal $X_c^0$ for a clipping ratio of 8 dB and 0 dB. For the high clipping ratio we can find a couple of subcarriers that can be used for peak reduction. The subcarriers (dots) in the top right corner of Fig. 4a can be fully utilized for peak reduction. From the subcarriers in the top left respectively bottom right corner the quadrature phase respectively inphase part is available.

However, for low clipping ratios as in Fig. 4b most subcarriers correspond to an extension direction that is not allowed. According to the above described ACE algorithm all non-acceptable extension directions are set to zero and will not contribute to peak reduction. However, a low clipping ratio is desirable, if a low OOB radiation should be achieved. As a result the unmodified ACE technique fails to achieve a very low OOB radiation.

As can be seen from Fig. 4b the reason for the problem with the low clipping ratio is the reduced power of the clipped and filtered signal. Therefore, we propose to introduce a weighting factor $w^{(\ell)}$ to compensate for the power loss

$$C_c = X - w^{(\ell)} X_c$$

or equivalently in time domain

$$c_c = x - w^{(\ell)} x_c$$

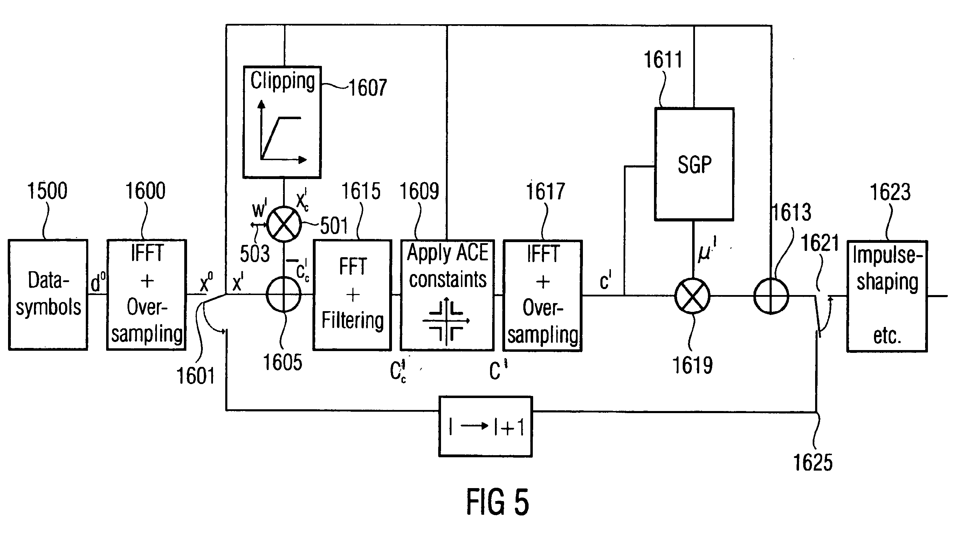

Figs. 5 and Fig. 6 show the signal flow for the improved ACE technique. For all equations $w^{(\ell)} = w^\ell$ holds.

An alternative interpretation for the weighting factor is that the clipped signal portion $c_c$ should become uncorrelated to $x_c$, i.e.

$$E\{C_c X^H\} = 0_{N \times N}$$

with $0_{N \times N}$ being the N times N all-zero matrix. For a non-zero correlation the extension vector $\mu^{(\ell)}c$ is biased by the original OFDM symbol x, which has high peaks. Hence, also the bias has high peaks, which are not reduced.

In time domain we can demand that

$$E\{C_c x^H\} = 0_{NL \times NL}$$

Note that in case of oversampling, i.e., $L>1$, the above equations are not equivalent because $C_c$ is not only Fourier transformed but also filtered version of $C_c$. Among others the filter will also suppress components, which are correlated to x.

It is explained e.g. in R. Dinis and A. Gusmao, "On the Performance Evaluation of OFDM Transmission Using Clipping Techniques," in Vehicular Technology Conference, vol. 5, September 1999, pp. 2923-2928, that for a high number N of uncorrelated subcarriers, the input vector x is a Gaussian stochastic process at least for the first iteration. It is also described there that, if furthermore $E\{x\}=0_{NL}$, then the clipped signal can be expressed as

$$x_c = \alpha^{(\ell)} x + n_c$$

Here, $\alpha^{(\ell)}$ is a constant depending on the clipping ratio and the statistical properties of x, and $n_c$ is uncorrelated to x, i.e.

$$E\{n_c x^H\} = 0_{N \times N}$$

With the above we get for the correlation

$$E\{c_c x^H\} = \left(1 - w^{(\ell)} \alpha^{(\ell)}\right) E\{xx^H\}$$

This term can only be zero, if $w^{(\ell)}=1/\alpha^{(\ell)}$

In practice we have only a limited number of subcarriers N, and the above assumptions with respect to zero-correlation are only approximately valid. Also the peak reduction during previous iterations will disturb the required Gaussian distribution of the amplitudes. Therefore, it is generally impossible to achieve zero-correlation. Our approach to determine an optimum weight factor is to minimize the correlation

$$w_{freq}^{(\ell)} = \arg \min_{w^{(\ell)}} \mathrm{Tr}\left\{\left(C_c X^H\right)^H C_c X^H\right\}$$

Tr{·} denotes the trace operator. With the above we can solve

$$\frac{\partial}{\partial w_{freq}^{(\ell)}} \mathrm{Tr}\left\{\left(C_c X^H\right)^H C_c X^H\right\} = 0$$

$$= \mathrm{Tr}\left\{-2 \mathrm{Re}\{XX^H X_c X^H\} + 2 w_{freq}^{(\ell)} XX_c^H X_c C^H\right\}$$

and receive the real weighting factor

$$w^{(\ell)}_{freq} = \frac{\mathrm{Re}\{X^H X_c\}}{X^H_c X_c}$$

As an interesting remark we notice that the same result is obtained for $w^{(\ell)}$ by minimizing the power of the filtered clipped signal portion in frequency domain, i.e.,

$$w^{(\ell)}_{freq} = \arg\min_{w^{(\ell)}} \left\| C_c \right\|^2_2$$

In signal space this result can be interpreted as shifting all clouds of clipping noise to the origin of the coordinate system in order to get the clipped signal portion (not depicted).

A disadvantage of the above weighting factor is that in comparison to the original ACE algorithm one additional FFT is needed for each iteration in order to determine $X_C$. This corresponds to an increase of computational complexity by approximately 50%. Therefore, an easier way how to determine the weighting factor is desirable. This can be achieved by neglecting the filtering operation. In this case the weighting factor can be calculated in time domain as

$$w^{(\ell)}_{time} = \arg\min_{w^{(\ell)}} \mathrm{Tr}\left\{\left(c_c x^H\right)^H c_c x^H\right\}$$
$$= \frac{\mathrm{Re}\{x^H x_c\}}{x^H_c x_c}$$

A further reduction in computational complexity is possible by not actually calculating the weighting factor for each symbol but just using a constant expectation value

$$w^{(\ell)}_{aver} = E\left\{w^{(\ell)}_{freq}\right\} = \frac{\mathrm{Re}\{E\{X^H X_c\}\}}{E\{X^H_c X_c\}}$$

For very low clipping ratios the ACE technique has problems to find suitable extension vectors at all as described in A. Saul, "Comparison between Recursive Clipping and Active Constellation Extension for Peak Reduction in OFDM Systems," in Proc. Int. Symp. on Wireless Personal Multimedia Communications, vol. 1, October 2003, pp. 37-41.

In this case it might be interesting to investigate a weighting factor

$$w^{(\ell)}_{const} = k w^{(\ell)}_{aver}$$

By a constant factor $k > 1$ additional subcarriers can be utilized for peak reduction; for $k < 1$ less subcarriers are used. However, the correlation is not minimized any more.

Additionally, the frequency domain signals may be filtered and the time domain signals may be oversampled. Only for the special case that the oversampling rate L=1, oversampling and filtering is not necessary.

In accordance with a further aspect, the present invention provides an apparatus for generating a transmit signal from an input signal, wherein the input signal comprises an amplitude peak resulting from a superposition of a plurality of frequency signals due to a multicarrier modulation scheme. The apparatus may comprise the apparatus for generating an error signal from the input signal, as has been described above, a processor for processing the error signal to obtain a processed error signal, and a combiner for combining a processed error signal with the input signal to obtain the transmit signal having a reduced amplitude peak.

Fig. 5 shows an apparatus for generating a transmit signal in accordance with a first embodiment of the present invention.

Contrary to the apparatus shown in Fig. 11, the apparatus of Fig. 5 comprises a multiplier 501 coupled between the output of the clipping element 1607 and the input of the subtractor 1605. The multiplier 501 further comprises a further input 503.

As is shown in Fig. 5, the multiplier 501 is formed for weighting a distorted portion of the input signal, the distorted portion being provided by the clipping element 1607. The weighting factor is provided via the further input 503 of the multiplier 501 and can be pre-stored or pre-calculated as has been explained above. The subtractor 1605 provides an error signal in time domain by subtracting the weighted distorted portion (distorted signal) from the input signal provide via the input 1601. The clipping element 1607 corresponds to the previously mentioned means for distorting, the multiplier 501 is comprised by the inventive means for weighting and the subtractor 1605 is comprised by the inventive combiner.

The apparatus shown in Fig. 5 is formed for generating the error signal in time domain. The error signal is then transformed by the FFT 1605 and filtered in order to obtain an error signal in frequency domain. As has been mentioned above, the error signal may directly be provided in frequency domain, when the distorted signal and the input signal both are transformed in frequency domain before calculating the difference.

The transmit signal, which is a time domain signal, is provided via the output of the adder 1613, wherein the adder 1613 is an embodiment of the combiner for combining the processed error signal provided by the multiplier 1619 with the input signal for obtaining the transmit signal, which is, in the following, shaped by the impulse shaper 1623.

It is to be noted that the inventive processor may further comprise the elements 1609, 1611, 1613, 1617, 1619, and 1623.

Fig. 6 shows an embodiment of an apparatus for generating an error signal in accordance with a further embodiment of the present invention.

Unlike the apparatus shown in Fig. 5, the apparatus of Fig. 6 comprises a first FFT 601 coupled between the amplitude limiting element 1607 and the multiplier 501. Additionally, the apparatus comprises a second FFT 603 coupled between an input 605 of the apparatus, via which the input signal is provided, and the subtractor 1605.

The first FFT 601 is formed for transforming the distorted portion of the input signal provided by the limiting element 1607 into a frequency domain. The limiting element 1607 is formed for amplitude clipping, by the way of example only. Accordingly, the second FFT 603 is formed for transforming the input signal into frequency domain. As is depicted in Fig. 6, the multiplier 501 is formed for multiplying the values of the spectral representation of the (e.g. amplitude limited) distorted portion provided by the amplitude limiting element 1607 by the weighting factor. The first and the second FFT my further perform filtering.

The multiplier 501 provides a distorted signal in frequency domain, wherein its coefficients corresponding to spectral values are weighted by the same weighting factor. The subtractor 1605 is formed for providing the error signal directly in frequency domain by subtracting the distorted signal in frequency domain from a spectral representation of the input signal provided by the FFT 603.

As has been explained above, a distribution of the clipping noise has an influence on the BER. The distribution of the prior art ACE technique shown in Fig. 12b approximately corresponds to the theoretical distribution shown in Fig. 3a for relatively high $E_b/N_0$. On the other hand, if the noise power becomes stronger in relation to the minimum distance between two symbols, e.g. if 16QAM modulation or higher is used, a different noise distribution similar to that shown in Fig. 3b and 3c may result in a better performance. Furthermore, if the required OOB radiation is very low, then the clipping ratio has to be chosen very low, and hence, the clipping noise power is quite high. Therefore, the right-angled noise distribution depicted in Fig. 3d may not be an optimum choice. Therefore, the present invention further provides a concept for providing, for example, a clipping noise distribution that minimizes the total error rate of a multi-carrier signal.

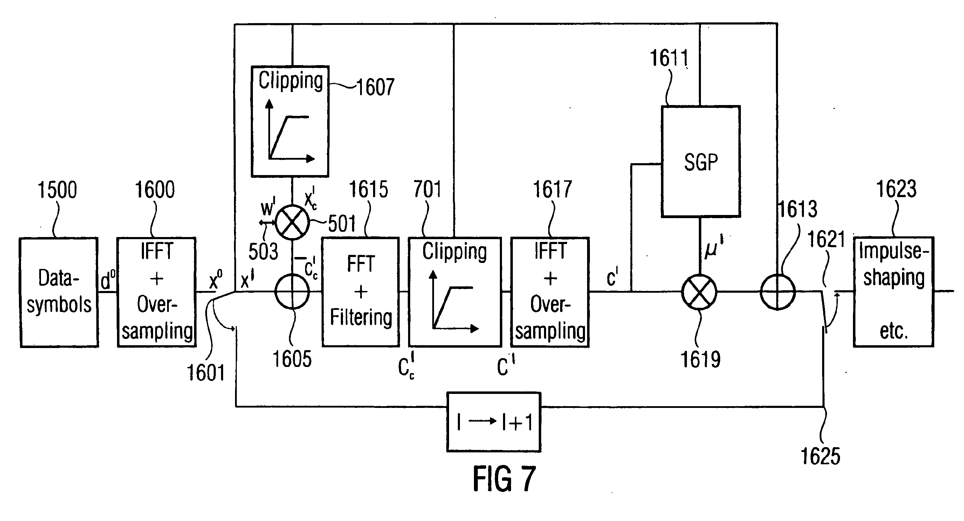

Fig. 7 shows an apparatus for generating a transmit signal in accordance with a further embodiment of the present invention.

In difference to the embodiment of Fig. 5, the apparatus shown in Fig. 7 comprises means 701 for manipulating a preliminary error signal provided by the FFT 1615 to obtain the error signal. The means 701 for manipulating, which is comprised by the inventive processor, is coupled between the FFT 1615 and the IFFT 1617. In other words, the means 701 replaces the ACE constraint block 1609.

The means 701 for manipulating is formed for varying a preliminary error signal value from a set of preliminary error signal values provided by the FFT 1615 in order to obtain the error signal in frequency domain. The error signal is then transformed into time domain by the IFFT 1617. As is shown in Fig. 7, the means 701 for manipulating may be operative for clipping a magnitude of the preliminary error signal values. The means for manipulating may be configured for varying the preliminary error signal such that the total error rate of the signal, e.g. of the multi-carrier signal, is reduced. For example, the (complex) error signal value may be in a predetermined set of values. The predetermined set of values may be obtained from a predetermined value range, by the way of example.

For example, the means for manipulating may be configured for varying the preliminary error signal value such that the error signal value is in a predetermined value range, wherein the predetermined value range may be obtained from calculating the error probabilities shown in Figs. 3a to 3d, by the way of example only.

In comparison with the embodiment shown in Fig. 5, the ACE constraints in frequency domain are replaced by manipulating the preliminary error signal values in frequency domain. For example, the ACE constraints in frequency domain are replaced by clipping the clipped signal portion in frequency domain, wherein the clipped signal portion corresponds to the preliminary error signal. This example effectively limits the clipping noise power on every sub-carrier. The resulting distribution of signal space constellation points at the output of the adder 1613, i.e. after combining a version of the error signal in time domain provided by the multiplier 1619 with the input signal is circular.

The distribution of the clipping noise has some influence on the error rate at the receiver. By shaping the clipping noise a signal constellation can be achieved that allows peak reduction while a good error rate can be expected.

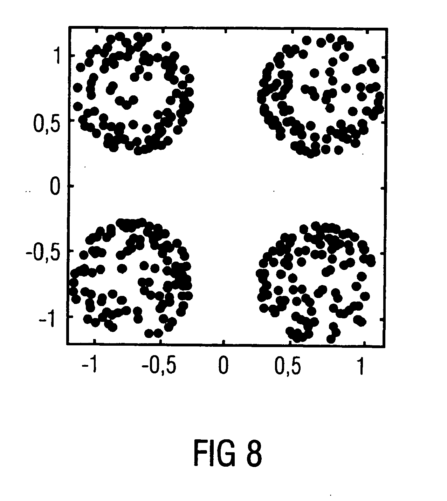

One concrete realization of this idea for a special case is depicted in Fig. 7. It can be seen that in comparison with Fig. 5 the ACE constraints in frequency domain are replaced by clipping the clipped signal portion in frequency domain. This effectively limits the clipping noise power on every subcarrier. The resulting signal constellation at the output of the technique is circular as shown in Fig. 8.

An additional advantage of e.g. a circular distribution above a right-angled distribution is that during the iterative process of determining a good distortion vector $x^{(\ell)}-x^0$ it is possible to step back on some subcarriers, if the previous iterations resulted in a distortion term that is too big for canceling out the peaks optimally. Stepping back means that the distorted QAM symbols automatically approach the undistorted location in the signal plane and $|\Delta d|$ decreases. Furthermore, all subcarriers can be utilized for peak reduction. This is not possible for ACE with 16 QAM or higher constellations. These two properties will become essential also for the inventive technique, which is introduced in the next section. for the case of QPSK mapping (modulation). As is shown in Fig. 8, the means for manipulating varies the preliminary signal error values by limiting the magnitudes such that in a signal space domain a circular distribution results. However, the distribution may be rectangular or may have a shape determined by the error probability curves mentioned above.

An additional advantage of e.g. a circular distribution in comparison with a right-angle distribution is that during the iterative process of determining a good distortion vector $x^{\ell}-x^0$ it is possible to step back on some sub-carriers if the previous iterations result in a distortion term that is too big for cancelling out the peaks optimally. Stepping back means that the distorted QAM (QPSK) symbols automatically approaches the undistorted location in the signal plane (signal space domain) and $|\Delta d|$ decreases. Furthermore, all sub-carriers can be utilized for peak reduction. This is not possible using a conventional ACE approach with 16QAM or higher constellations, by the way of example only.

Generally, other than circular distributions of the clipping noise can be achieved by replacing the ACE constraints with other constraints. For example, circular constellations can be used for inner symbols of a 16QAM or higher mapping, and regular ACE constraints can be used for the outer symbols. In this context, the term "inner symbols" refers to signal space constellation points being associated with the smallest magnitude among signal space constellation points used by the mapping scheme. Accordingly, the term "outer symbols" refers to signal space constellation points having magnitudes being greater than the magnitudes of the inner symbols.

Furthermore, rectangular constellations can be used for the clipping noise. Rectangular constellations can be achieved with less computational complexity than circular constellations by clipping the real part and the imaginary part of the clipping noise separately. Generally speaking, different than circular constellations can be achieved by separately manipulating real parts and imaginary parts of the preliminary error signal values, respectively.

In accordance with a further aspect of the present invention, different constraints for each sub-carrier can be used. Specially in the case of adaptive modulation where the modulation scheme (mapping scheme) varies over time and/or frequency, a clipping level (e.g. in the case of the circular distribution) for clipping the preliminary error signal values $C_c^{\ell}$ according to the signal mapping can be chosen, e.g. using a lower clipping level for sub-carriers with 16QAM and a different clipping level which can be higher for sub-carriers with QPSK. However, the preliminary error signal values may be treated specifically, so that different distributions can be achieved.

Naturally, this includes the case that no limitation of the clipping noise is made for unused sub-carriers.

Furthermore, the adaptation can be performed with respect to the channel state information (CSI), the quality of service (QOS) requirements, for example, target BER, with respect to other criteria or to combinations of criteria.

One of such criteria is, for example, an available bandwidth or a time delay.

A performance of the inventive, improved ACE technique and of the inventive clipping technique have been compared with three conventional clipping techniques, which have been described above. The performance comparison has been performed in the way that has been described in A. Saul, "Analysis of Peak Reduction in OFDM Systems Based on Recursive Clipping," in Proc. Int. OFDM-Workshop, vol. 1, September 2003, pages 103-107, and . Saul, "Comparison between Recursive Clipping and Active Constellation Extension for Peak Reduction in OFDM Systems," in Proc. Int. Symp. On Wireless Personal Multimedia Communications, vol. 1, October 2003, pages 37-41.

Therefore, an equivalent digital baseband model of the transmission system is simulated, and two measurements are performed in order to investigate the effects on the OOB radiation and on the ICI.

In order to evaluate the OOB radiation, the PSD of the modulated and peak reduced signal is estimated after distortion by an HPA. Furthermore, the distorted signal is transmitted over an AWGN channel, and the uncoded BER at the output of a conventional OFDM receiver is measured. This measurement is repeated for several clipping ratios. For comparison of the results, it is sufficient to look at the PSD at the normalized frequency $f/f_s$=0,6, and at the $E_b/N_0$ that is required to achieve a target BER of e.g. $10^{-3}$ or $10^{-4}$ .

The system parameters were chosen follows. The transmission scheme were OFDM using a number of sub-carriers N = 1024. The symbol mappings where QPSK, 16QAM and 64QAM without channel coding. The channel was assumed to be an AWGN channel, wherein the oversampling rate (clipping) was equal to 2. The amplifier model was chosen according to the Rapp's SSPA (p = 10). The output back-off was OBO = 6 dB. The guard interval was equal to 11.1% and the roll-off factor was 11.1%. A mismatching was equal to 0.4dB, wherein the target bit error rate were $10^{-3}$ and $10^{-4}$. The normalised frequency was $f/f_s$=0,6 and the clipping ratio was CR = 0 dB ... 12 dB.

The chosen parameters described above for the simulations are common for all clipping techniques. Furthermore, for recursive clipping, two iterations have been chosen, which is considered as being an optimum for the considered scenario. For ACE and improved ACE up to 3 iterations have been used, additional iterations would introduce a small performance improvement for low PSDs. For the inventive clipping technique are performed by the inventive means for manipulating up to 3 iterations have been chosen for QPSK mapping. For 16QAM and 64QAM mapping only 2 iterations have been used since most of the performance improvement is already achieved after 2 iterations.

The computational complexity of all techniques is mainly determined by the number of FFTs, so that a number of FFTs may be twice the number of iterations. None-recursive clipping corresponds to one iteration in this respect. One iteration means that the peak reduction procedure is not repeated.

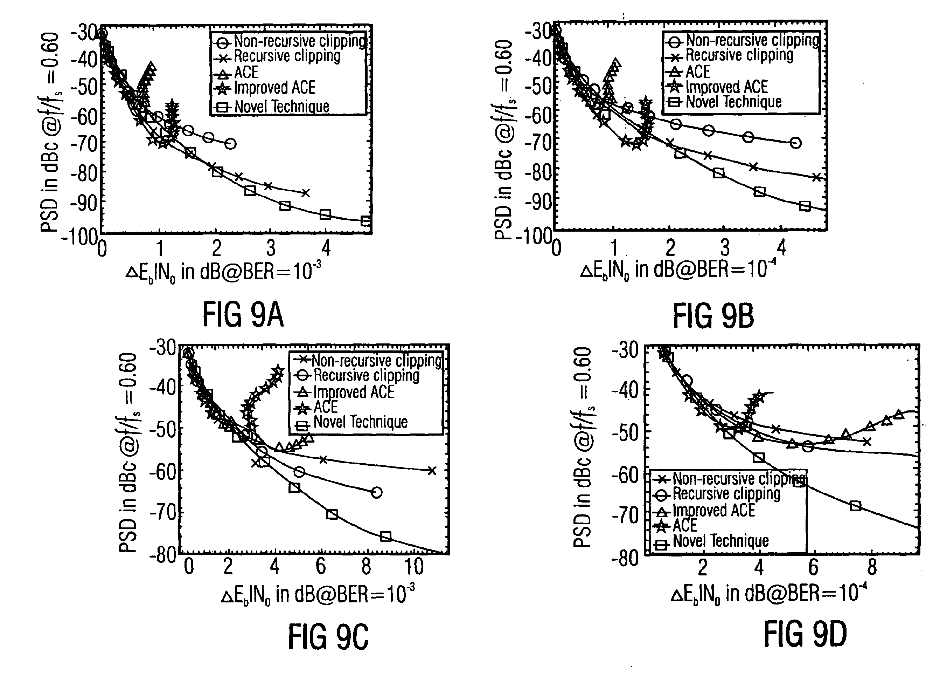

Fig. 9a shows a performance comparison for QPSK transmission and a target BER of $10^{-3}$. The y-axis shows the PSD at the normalised frequency $f/f_s$=0,6, and the x-axis shows the loss $\Delta E_b/N_0$ against an undistorted transmission under the condition of the target BER = $10^{-3}$. The top left corner of the plot where all curves meet corresponds to the highest clipping ratio of CR = 12dB. When following the curves to lower PSDs and higher losses in $C_c^\ell$, the clipping ratio decreases.

Summarizing, it can be seen that the conventional ACE technique achieves a lowest PSD of about -62dB with a slightly better performance than recursive clipping at this point. The inventive improved ACE technique achieves a slightly better performance at PSD = -62dB and can achieve up to PSD = -70dB with a better performance than recursive clipping. Between PSD = -70dB and PSD = -77dB, the recursive clipping technique has the best performance. Especially, in the case of PSD less than -77dB, the inventive clipping technique outperforms all other techniques at a loss of $\Delta E_b/N_0$>1,8dB.

For a lower target BER = $10^{-4}$, as is shown in Fig. 9b, the inventive improved ACE technique and the inventive clipping technique perform better than all investigated conventional techniques. While the same OOB radiation can be achieved for a certain clipping ratio, the recursive and non-recursive clipping technique experience a stronger degradation in $E_b/N_0$ than the ACE techniques respectively the inventive clipping technique associated with a shaping of the error signal, where the clipping noise distribution is optimised for low PSD respectively for high PSD requirements.

Fig. 9c shows a comparison for 16QAM transmission and target BER = $10^{-3}$. The ACE techniques cannot achieve superior performance because only some sub-carriers can be used for peak reduction. Furthermore, the small minimum distance between the symbols makes a right-angle distribution of the clipping noise less favourable. The inventive clipping technique on the other hand considers this fact and achieves e.g. an approximately 0.5dB better $E_b/N_0$ for PSD = -85dB than the second best technique for this scenario, which is recursive clipping.

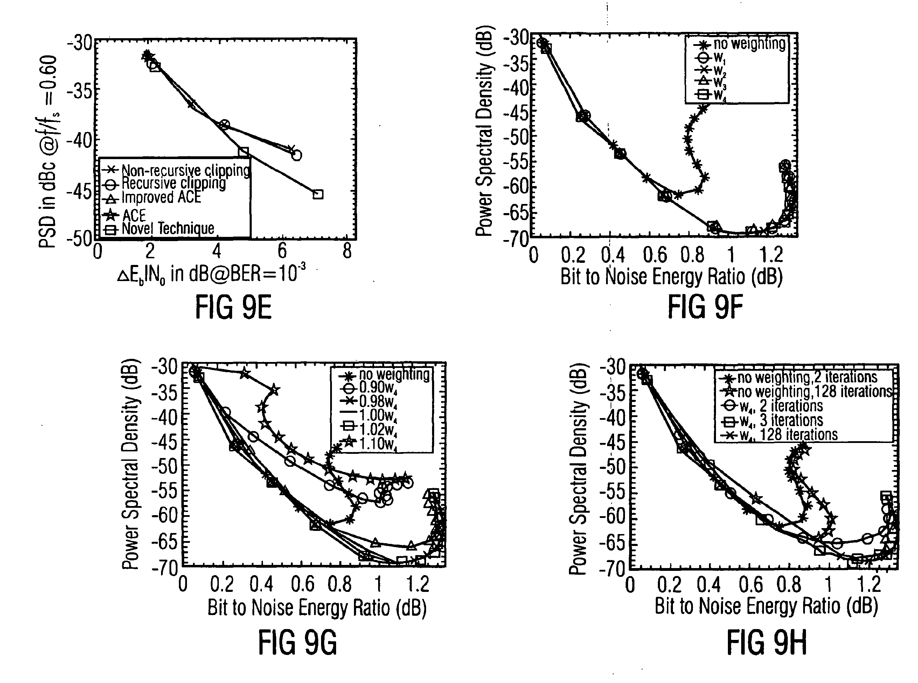

For a target BER = $10^{-4}$ , the performance improvement of the inventive clipping technique is even higher, which is demonstrated in Fig. 9e. From the investigated clipping techniques it is the only one that can achieve PSD = -65 dB or less even under these difficult circumstances. However, all of the investigated techniques suffer from a significant loss in $E_b/N_0$ of a few decibel. Furthermore, the inventive improved ACE technique has a $E_b/N_0$ advantage of up to 0.5dB over the conventional techniques for PSD < - 50dB.

Fig. 9e shows a performance of 64 QAM transmission scheme. It can be seen that already for a target BER = $10^{-3}$ there is a strong degradation in $E_b/N_0$ for all investigated techniques. Although the inventive clipping technique has better performance than all other investigated techniques, only a small reduction of the PDS can be achieved. For example, for PSD = -45 dB there is still a loss of more than $\Delta E_b/N_0$ = 6 dB in comparison to undistorted transmission even for the inventive clipping technique.

Fig. 9f shows a performance comparison for different weighting factors, Fig. 9g shows a performance comparison for the case of weighting with constant weighting factors, and Fig. 9h shows a performance comparison in dependence on a number of iterations.

The present invention introduces a weighting factor for the clipped signal in order to improve the performance of the active constellation extension technique, as has been demonstrated above. In particular, four specific ways are provided on how to choose the weighting factor. Moreover, shaping of the clipping noise per sub-carrier can be performed in order to minimise the total error rate of a multicarrier signal. The shaping of the clipping noise per sub-carrier may be performed with respect to a specific shape (specific predetermined area) that is different for each sub-carrier. Moreover, the shape mentioned above can be adapted to the modulation alphabet on the specific sub-carrier, to the channel state information (CSI) or to the quality of service (QOS), i.e. to the target error rate, to combinations of these three possibilities or to other requirements.

Moreover, the present invention provides a concept for shaping the clipping noise, i.e. the clipped signal portion (distorted portion) by limiting the noise power, i.e. the clipping signal portion's power per sub-carrier, which may result in the previously mentioned circular constellation. Moreover, the noise power per sub-carrier can be limited by clipping the noise in frequency domain. The inventive clipping technique may include the weighting factor described above, shaping of the clipping noise, weighting of the clipping noise, e.g. by the smart gradient project algorithm or repeated peak reduction by recursive signal processing.

The inventive concepts contribute to a lower out-of-band radiation, a better transmission quality, a lowered requirement for design of radio frequency parts that results in reduced costs, reduced space, and a lower power consumption. In comparison to other clipping techniques the inventive improvements especially pay out in case of a restrictive spectrum mask, high requirements for the BER and a high data rate corresponding to a high number of sub-carriers and a high number of signal mapping points, e.g. 16QAM. The inventive concepts may be used in other fields of wireless radio, broad band access systems, multicarrier systems, transmitter design, non-linearities, peak power reduction, clipping techniques, etc.

In accordance with the present invention, oversamling and filtering is performed. Preferably, oversampling is used in order to find the peaks, since some peaks being present in an analogue signal would disappear for the time discrete signal without oversampling. By oversampling, the analogue signal is approximated and more peaks can be found. The filter is a consequence from oversampling. Without oversampling, e.g. the dynamic range reduction performed for example by the clipping block 1607 in Fig. 5 would create only inter carrier interference (ICI). With oversampling, the dynamic range reduction creates ICI and out-of-band radiation, which should be filtered.

Moreover, depending on certain implementation requirements of the inventive methods, the inventive methods can be implemented in hardware or in software. The implementation can be performed using a digital storage medium, in particular a disk or a CD having electronically readable control signals stored thereon, which can cooperate with a programmable computer system such that the inventive methods are performed. Generally, the present invention is, therefore, a computer program product with a program code stored on a machine-readable carrier, the program code being configured for performing the inventive methods, when the computer program product runs on a computer. In other words, the inventive methods are, therefore, a computer program having a program code for performing the inventive methods, when the computer program runs on a computer.

**Claims**

1. Apparatus for generating an error signal from an input signal, the input signal comprising a signal peak, the error signal to be combined with the input signal for generating a transmit signal having a reduced signal peak, the apparatus comprising:

   means (103) for limiting the input signal to obtain a limited signal;
   means (105; 201) for weighting the limited signal with a weighting factor to obtain a weighted signal;
   a combiner (107) for combining the input signal and the weighted signal to obtain the error signal.

2. Apparatus according to claim 1, wherein the means (103) for limiting is configured for amplitude limiting the input signal.

3. Apparatus according to claim 1 or 2, wherein the means (105; 201) for weighting comprises a multiplier for multiplying the limited signal by the weighting factor.

4. Apparatus according to any of the preceding claims 1 to 3, wherein the weighting factor depends on an energy change associated with limiting.

5. Apparatus according to any of the preceding claims 1 to 4, further comprising means (205) for providing the weighting factor.

6. Apparatus according to claim 5, wherein the means (205) for providing the weighting factor is configured for calculating the weighting factor from an energy ratio or from a power ration between an energy or power of the input signal and an energy or power of the limited signal.

7. Apparatus according to claim 6, wherein the means (205) for providing the weighting factor is configured for calculating the weighting factory $w_1^\ell$ for a 1-th input signal based on the following equation

$$w_1^\ell = \sqrt{\frac{X^{\ell H} X^\ell}{X_c^{\ell H} X_c^\ell}} = \sqrt{L \cdot N \cdot \frac{x^{\ell H} x^\ell}{X_c^{\ell H} X_c^\ell}}$$

wherein $X^1$ denotes a time frequency transform of the 1-th input signal $x^l$, $X_c^\ell$ denotes a time-frequency transform of a 1-th limited signal $X_c^l$, N denotes the number of subcarriers, L denotes an oversampling rate and H denotes transposition and conjugation.

8. Apparatus according to claim 6, wherein the means (205) for providing the weighting factor is configured for calculating the weighting factor $w_2^\ell$ for a 1-th input signal $x^1$ based on the following equation

$$w_2^\ell = \sqrt{\frac{x^{\ell H} x^\ell}{x_c^{\ell H} x_c^\ell}}$$

wherein $x_c^1$ denotes a 1-th limited signal.

9. Apparatus according to claim 6, wherein the means (205) for providing the weighting factor is configured for calculating the weighting factor $w_3^\ell$ from an expectation value of the energy ratio based on the following equation

$$w_3^\ell = \sqrt{L \cdot N \cdot \frac{E\{x_c^{lH} x_c^l\} x^{lH} x^l}{E\{X_c^{\ell H} X_c^\ell\} x_c^{lH} x_c^l}}$$

wherein $x^\ell$ denotes the $\ell$-th input signal, $X_c^\ell$ denotes a time-frequency transform of a $\ell$-th limited signal $x_c^\ell$, H denotes transposition and conjugation, N denotes the number of subcarriers, L denotes an oversampling rate and wherein E denotes the expectation operation.

10. Apparatus according to claim 6, wherein the means (205) for providing the weighting factor is configured for calculating the weighting factor $w_4^\ell$ from an expectation value of the energy ratio based on the following equation

$$w_4^\ell = \sqrt{L \cdot N \cdot \frac{E\{x^{\ell H} x^\ell\}(\ell)}{E\{X_c^{\ell H} X_c^\ell\}(\ell)}}$$

wherein $x^\ell$ denotes the $\ell$-th input signal, $\mathcal{X}_c^\ell$ denotes a time-frequency transform of a $\ell$-th limited signal $\mathcal{X}_c^\ell$, H denotes transposition and conjugation, N denotes the number of subcarriers, L denotes an oversampling rate and wherein E denotes the expectation operation.

11. Apparatus according to claims 6 to 10, wherein the means (205) for providing the weighting factor is configured for weighting the weighting factor with a constant to obtain a further weighted factor as the weighted factor.

12. Apparatus according to claim 6, wherein the means (205) for providing the weighting factor is configured for determining the weighting factor from a product based on the input signal and the limited signal, or an expectation value for the product based on the input signal and the limited signal.

13. Apparatus according to claim 12, wherein the means (205) for providing the weighting factor is configured for determining the weighting factor from a real part of the product based on the input signal and the limited signal, or from a real part of the expectation value for the product based on the input signal and the limited signal.

14. Apparatus according to claim 12 or 13, wherein the means (205) for providing the weighting factor is configured for determining the weighting factor $w_{freq}^{(\ell)}$ from a 1-th input signal based on the following equation:

$$w_{freq}^{(\ell)} = \frac{\mathrm{Re}\{X^H X_c\}}{X_c^H X_c}$$

wherein X denotes the spectral representation of the input signal, $X_c$ denotes a spectral representation of the limited signal, or

wherein the means (205) for providing a weighting factor is configured for determining the weighting factor $w_{time}^{(\ell)}$ in time domain based on the following equation;

$$w_{time}^{(\ell)} = \frac{\mathrm{Re}\{x^H x_c\}}{x_c^H x_c}$$

wherein x denotes the input signal in time domain, and $x_c$ denotes the limited signal.

15. Apparatus according to claims 12 to 14, wherein the means (205) for providing the weighting factor is configured for determining the weighting factor $w_{aver}^{(\ell)}$ for a 1-th input signal based on the following equation:

$$w_{aver}^{(\ell)} = E\{w_{freq}^{(\ell)}\} = \frac{\mathrm{Re}\{E\{X^H X_c\}\}}{E\{X_c^H X_c\}}$$

wherein X denotes a spectral representation of the input signal, $X_c$ denotes a spectral representation of the limited signal, and wherein H denotes a Hermitian operator, and wherein E denotes the expectation operator.

16. Apparatus according to claim 15, wherein the means (205) for providing the weighting factor is configured for determining the weighting factor $w_{const}^{(\ell)}$ based on the following equation:

$$w_{const}^{(\ell)} = kw_{aver}^{(\ell)}$$

wherein k is a constant factor.

17. Apparatus according to claims 12 to 16, wherein the means (205) for providing the weighting factor is configured for determining the weighting factor from a minimization of a cross-correlation between the input signal and the error signal, or from a minimization of a cross-correlation between a spectral representation of the input signal and a spectral representation of the error signal.

18. Apparatus according to claims 12 to 17, wherein the means (205) for providing a weighting factor is configured for determining the weighting factor by minimizing an energy of a spectral representation of the error signal.

19. Apparatus according to any of the preceding claims 1 to 18, wherein the combiner (107) comprises a subtractor for determining a difference between the input signal and the weighted signal to obtain the error signal.

20. Apparatus according to any of the preceding claims 1 to 19, wherein the combiner (107) comprises a first time-frequency transformer for providing a spectral representation of the input signal, a second time-frequency transformer for providing a spectral representation of the weighted signal, and a subtractor for determining a difference between the spectral representation of the input signal and the spectral representation of the weighted signal to obtain the error signal.

21. Apparatus according to claim 20, wherein the first time-frequency transformer and the second time-frequency transformer are Fourier transformer.

22. Apparatus according to any of the preceding claims 1 to 21, wherein the combiner (107) comprises a Fourier transformer for providing a spectral representation of the input signal and for providing a spectral representation of the weighted signal, and a subtractor for determining a difference between the spectral representation of the weighted signal and the spectral representation of the input signal to obtain the error signal.

23. Apparatus for generating a transmit signal from an input signal, wherein the input signal comprises an amplitude peak resulting from a superposition of a plurality of frequency signals due to a multicarrier modulation scheme, the apparatus comprising:

the apparatus for generating an error signal from the input signal according to claims 1 to 13;
a processor for processing the error signal to obtain a processed error signal; and
a combiner for combining a processed error signal with the input signal to obtain the transmit signal having a reduced amplitude peak.

24. Method for generating an error signal from an input signal, the input signal comprising a signal peak, the error signal to be combined with the input signal for generating a transmit signal having a reduced signal peak, the method comprising the following steps:

limiting the input signal to obtain a limited signal;
weighting the limited signal with a weighting factor greater than 1 to obtain a weighted signal; and
combining the input signal and the weighted signal to obtain the error signal.

25. Method for generating a transmit signal from an input signal, wherein the input signal comprises an amplitude peak resulting from a superposition of a plurality of frequency signals due to a multicarrier modulation scheme, the method comprising the following steps:

generating an error signal from the input signal in accordance with claim 24;
processing the error signal to obtain a processed error signal; and
combining the processed error signal with the input signal to obtain the transmit signal having a reduced amplitude peak.

26. Computer program having a program code adapted to perform the method according to claim 24 or the method according to claim 25, when the program runs on a computer.

**Patentansprüche**

1. Vorrichtung zum Erzeugen eines Fehlersignals aus einem Eingangssignal, wobei das Eingangssignal eine Signalspitze aufweist, wobei das Fehlersignal mit dem Eingangssignal kombiniert werden soll, um ein Sendesignal zu erzeugen, das eine verringerte Signalspitze aufweist, wobei die Vorrichtung folgende Merkmale aufweist:

   eine Einrichtung (103) zum Begrenzen des Eingangssignals, um ein begrenztes Signal zu erhalten;
   eine Einrichtung (105; 201) zum Gewichten des begrenzten Signals mit einem Gewichtungsfaktor, um ein gewichtetes Signal zu erhalten;
   eine Kombiniereinrichtung (107) zum Kombinieren des Eingangssignals und des gewichteten Signals, um das Fehlersignal zu erhalten.

2. Vorrichtung gemäß Anspruch 1, bei der die Einrichtung (103) zum Begrenzen zur Amplitudenbegrenzung des Eingangssignals konfiguriert ist.

3. Vorrichtung gemäß Anspruch 1 oder 2, bei der die Einrichtung (105; 201) zum Gewichten einen Multiplizierer zum Multiplizieren des begrenzten Signals mit dem Gewichtungsfaktor aufweist.

4. Vorrichtung gemäß einem der vorhergehenden Ansprüche 1 bis 3, bei der der Gewichtungsfaktor von einer dem Begrenzen zugeordneten Energieänderung abhängt.

5. Vorrichtung gemäß einem der vorhergehenden Ansprüche 1 bis 4, die ferner eine Einrichtung (205) zum Bereitstellen des Gewichtungsfaktors aufweist.

6. Vorrichtung gemäß Anspruch 5, bei der die Einrichtung (205) zum Bereitstellen des Gewichtungsfaktors zum Berechnen des Gewichtungsfaktors aus einem Energieverhältnis oder aus einem Leistungsverhältnis zwischen einer Energie oder Leistung des Eingangssignals und einer Energie oder Leistung des begrenzten Signals konfiguriert ist.

7. Vorrichtung gemäß Anspruch 6, bei der die Einrichtung (205) zum Bereitstellen des Gewichtungsfaktors zum Berechnen des Gewichtungsfaktors $w_1^\ell$ für ein l.tes Eingangssignal auf der Basis der folgenden Gleichung

$$w_1^\ell = \sqrt{\frac{X^{\ell H} X^\ell}{X_c^{\ell H} X_c^\ell}} = \sqrt{L \cdot N \cdot \frac{x^{\ell H} x^\ell}{X_c^{\ell H} X_c^\ell}}$$

konfiguriert ist, wobei $X^1$ eine Zeitfrequenztransformierte des l.ten Eingangssignals $x^1$ bezeichnet, $X_c^\ell$ eine Zeitfrequenztransformierte eines 1.ten begrenzten Signals $x_c^1$ bezeichnet, N die Anzahl von Unterträgern bezeichnet, L eine Überabtastrate bezeichnet und H eine Transposition und Konjugation bezeichnet.

8. Vorrichtung gemäß Anspruch 6, bei der die Einrichtung (205) zum Bereitstellen des Gewichtungsfaktors zum Berechnen des Gewichtungsfaktors $w_2^\ell$ für ein 1.tes Eingangssignal $x^1$ auf der Basis der folgenden Gleichung

$$w_2^\ell = \sqrt{\frac{x^{\ell H} x^\ell}{x_c^{\ell H} x_c^\ell}}$$

konfiguriert ist, wobei $x_c^1$ ein 1.tes begrenztes Signal bezeichnet.

**9.** Vorrichtung gemäß Anspruch 6, bei der die Einrichtung (205) zum Bereitstellen des Gewichtungsfaktors zum Berechnen des Gewichtungsfaktors $w_3^\ell$ ausgehend von einem Erwartungswert des Energieverhältnisses auf der Basis der folgenden Gleichung

$$w_3^\ell \;=\; \sqrt{L \cdot N \cdot \frac{E\{x_c^{1H} x_c^1\}\{x^{1H} x^1\}}{E\{x_c^{\ell H} x_c^\ell\}\{x_c^{1H} x_c^1\}}}$$

konfiguriert ist, wobei $x^\ell$ das 1.te Eingangssignal bezeichnet, $X_c^\ell$ eine Zeitfrequenztransformierte eines 1.ten begrenzten Signals $x_c^\ell$ bezeichnet, H Transposition und Konjugation bezeichnet, N die Anzahl von Unterträgern bezeichnet, L eine Überabtastrate bezeichnet und wobei E die Erwartungsoperation bezeichnet.

**10.** Vorrichtung gemäß Anspruch 6, bei der die Einrichtung (205) zum Bereitstellen des Gewichtungsfaktors zum Berechnen des Gewichtungsfaktors $w_4^\ell$ ausgehend von einem Erwartungswert des Energieverhältnisses auf der Basis der vorliegenden Gleichung

$$w_4^\ell = \sqrt{L \cdot N \cdot \frac{E\{x^{\ell H} x^\ell\}(\ell)}{E\{X_c^{\ell H} X_c^\ell\}(\ell)}}$$

konfiguriert ist, wobei wobei $x^\ell$ das 1.te Eingangssignal bezeichnet, $X_c^\ell$ eine Zeitfrequenztransformierte eines 1.ten begrenzten Signals $x_c^\ell$ bezeichnet, H Transposition und Konjugation bezeichnet, N die Anzahl von Unterträgern bezeichnet, L eine Überabtastrate bezeichnet und wobei E die Erwartungsoperation bezeichnet.

**11.** Vorrichtung gemäß einem der Ansprüche 6 bis 10, bei der die Einrichtung (205) zum Bereitstellen des Gewichtungsfaktors zum Gewichten des Gewichtungsfaktors mit einer Konstanten konfiguriert ist, um einen weiteren gewichteten Faktor als den gewichteten Faktor zu erhalten.

**12.** Vorrichtung gemäß Anspruch 6, bei der die Einrichtung (205) zum Bereitstellen des Gewichtungsfaktors zum Bestimmen des Gewichtungsfaktors ausgehend von einem Produkt auf der Basis des Eingangssignals und des begrenzten Signals oder ausgehend von einem Erwartungswert für das Produkt auf der Basis des Eingangssignals und des begrenzten Signals konfiguriert ist.

**13.** Vorrichtung gemäß Anspruch 12, bei der die Einrichtung (205) zum Bereitstellen des Gewichtungsfaktors zum Bestimmen des Gewichtungsfaktors ausgehend von einem echten Teil des Produkts auf der Basis des Eingangssignals und des begrenzten Signals oder ausgehend von einem echten Teil des Erwartungswertes für das Produkt auf der Basis des Eingangssignals und des begrenzten Signals konfiguriert ist.

**14.** Vorrichtung gemäß Anspruch 12 oder 13, bei der die Einrichtung (205) zum Bereitstellen des Gewichtungsfaktors zum Bestimmen des Gewichtungsfaktors $w_{freq}^{(\ell)}$ ausgehend von einem l.ten Eingangssignal auf der Basis der folgenden Gleichung konfiguriert ist:

$$w_{freq}^{(\ell)} = \frac{\mathrm{Re}\{X^H X_c\}}{X_c^H X_c}$$

wobei X die spektrale Darstellung des Eingangssignals bezeichnet, $X_C$ eine spektrale Darstellung des begrenzten Signals bezeichnet oder

bei der die Einrichtung (205) zum Bereitstellen eines Gewichtungsfaktors zum Bestimmen des Gewichtungsfaktors $w_{time}^{(\ell)}$ im Zeitbereich auf der Basis der folgenden Gleichung konfiguriert ist:

$$w_{time}^{(\ell)} = \frac{\mathrm{Re}\{x^H x_c\}}{x_c^H x_c}$$

wobei x das Eingangssignal im Zeitbereich bezeichnet und $x_C$ das begrenzte Signal bezeichnet.

15. Vorrichtung gemäß Ansprüchen 12 bis 14, bei der die Einrichtung (205) zum Bereitstellen des Gewichtungsfaktors zum Bestimmen des Gewichtungsfaktors $w_{aver}^{(\ell)}$ für ein l.tes Eingangssignal auf der Basis der folgenden Gleichung konfiguriert ist:

$$w_{aver}^{(\ell)} = E\{w_{freq}^{(\ell)}\} = \frac{\mathrm{Re}\{E\{X^H X_c\}\}}{E\{X_c^H X_c\}}$$

wobei X eine spektrale Darstellung des Eingangssignals bezeichnet, $X_c$ eine spektrale Darstellung des begrenzten Signals bezeichnet, und wobei H einen Hermite-Operator bezeichnet und wobei E den Erwartungsoperator bezeichnet.

16. Vorrichtung gemäß Anspruch 15, bei der die Einrichtung (205) zum Bereitstellen des Gewichtungsfaktors zum Bestimmen des Gewichtungsfaktors $w_{const}^{(\ell)}$ auf der Basis der folgenden Gleichung konfiguriert ist:

$$w_{const}^{(\ell)} = k w_{aver}^{(\ell)}$$

wobei k ein konstanter Faktor ist.

17. Vorrichtung gemäß Ansprüchen 12 bis 16, bei der die Einrichtung (205) zum Bereitstellen des Gewichtungsfaktors zum Bestimmen des Gewichtungsfaktors ausgehend von einer Minimierung einer Kreuzkorrelation zwischen dem Eingangssignal und dem Fehlersignal oder ausgehend von einer Minimierung einer Kreuzkorrelation zwischen einer spektralen Darstellung des Eingangssignals und einer spektralen Darstellung des Fehlersignals konfiguriert ist.

18. Vorrichtung gemäß Ansprüchen 12 bis 17, bei der die Einrichtung (205) zum Bereitstellen eines Gewichtungsfaktors zum Bestimmen des Gewichtungsfaktors durch Minimieren einer Energie einer spektralen Darstellung des Fehlersignals konfiguriert ist.

19. Vorrichtung gemäß einem der vorhergehenden Ansprüche 1 bis 18, bei der die Kombiniereinrichtung (107) eine Subtrahiereinrichtung zum Bestimmen einer Differenz zwischen dem Eingangssignal und dem gewichteten Signal, um das Fehlersignal zu erhalten, umfasst.

20. Vorrichtung gemäß einem der vorhergehenden Ansprüche 1 bis 19, bei der die Kombiniereinrichtung (107) einen ersten Zeitfrequenzwandler zum Bereitstellen einer spektralen Darstellung des Eingangssignals, einen zweiten Zeitfrequenzwandler zum Bereitstellen einer spektralen Darstellung des gewichteten Signals und eine Subtrahiereinrichtung zum Bestimmen einer Differenz zwischen der spektralen Darstellung des Eingangssignals und der spektralen Darstellung des gewichteten Signals, um das Fehlersignal zu erhalten, umfasst.

21. Vorrichtung gemäß Anspruch 20, bei der der erste Zeitfrequenzwandler und der zweite Zeitfrequenzwandler Fourier-Wandler sind.

**22.** Vorrichtung gemäß einem der vorhergehenden Ansprüche 1 bis 21, bei der die Kombiniereinrichtung (107) einen Fourier-Wandler zum Bereitstellen einer spektralen Darstellung des Eingangssignals und zum Bereitstellen einer spektralen Darstellung des gewichteten Signals und eine Subtrahiereinrichtung zum Bestimmen einer Differenz zwischen der spektralen Darstellung des gewichteten Signals und der spektralen Darstellung des Eingangssignals, um das Fehlersignal zu erhalten, umfässt.

**23.** Vorrichtung zum Erzeugen eines Sendesignals aus einem Eingangssignal, wobei das Eingangssignal eine Amplitudenspitze aufweist, die aus einer Überlagerung einer Mehrzahl von Frequenzsignalen auf Grund eines Mehrträger- Modulationsschemas resultiert, wobei die Vorrichtung folgende Merkmale aufweist:

die Vorrichtung zum Erzeugen eines Fehlersignals aus dem Eingangssignal gemäß Ansprüchen 1 bis 13;
einen Prozessor zum Verarbeiten des Fehlersignals, um ein verarbeitetes Fehlersignal zu erhalten; und
eine Kombiniereinrichtung zum Kombinieren eines verarbeiteten Fehlersignals mit dem Eingangssignal, um das Sendesignal, das eine verringerte Amplitudenspitze aufweist, zu erhalten.

**24.** Verfahren zum Erzeugen eines Fehlersignals aus einem Eingangssignal, wobei das Eingangssignal eine Signalspitze aufweist, wobei das Fehlersignal, das mit dem Eingangssignal kombiniert werden soll, um ein Sendesignal zu erzeugen, eine verringerte Signalspitze aufweist, wobei das Verfahren folgende Schritte umfasst:

Begrenzen des Eingangssignals, um ein begrenztes Signal zu erhalten;
Gewichten des begrenzten Signals mit einem Gewichtungsfaktor von mehr als 1, um ein gewichtetes Signal zu erhalten; und
Kombinieren des Eingangssignals und des gewichteten Signals, um das Fehlersignal zu erhalten.

**25.** Verfahren zum Erzeugen eines Sendesignals aus einem Eingangssignal, wobei das Eingangssignal eine Amplitudenspitze aufweist, die aus einer Überlagerung einer Mehrzahl von Frequenzsignalen auf Grund eines Mehrträger- Modulationsschemas resultiert, wobei das Verfahren folgende Schritte umfasst:

Erzeugen eines Fehlersignals aus dem Eingangssignal gemäß Anspruch 24;
Verarbeiten des Fehlersignals, um ein verarbeitetes Fehlersignal zu erhalten; und
Kombinieren des verarbeiteten Fehlersignals mit dem Eingangssignal, um das Sendesignal, das eine verringerte Amplitudenspitze aufweist, zu erhalten.

**26.** Computerprogramm, das einen Programmcode aufweist, der dahin gehend angepasst ist, das Verfahren gemäß Anspruch 24 oder das Verfahren gemäß Anspruch 25 durchzuführen, wenn das Programm auf einem Computer läuft.

**Revendications**

**1.** Appareil pour générer un signal d'erreur à partir d'un signal d'entrée, le signal d'entrée comprenant une crête de signal, le signal d'erreur à combiner avec le signal d'entrée pour générer un signal de transmission ayant une crête de signal réduite, l'appareil comprenant:

un moyen (103) destiné à limiter le signal d'entrée, pour obtenir un signal limité;
un moyen (105; 201) destiné à pondérer le signal limité par un facteur de pondération, pour obtenir un signal pondéré;
un combinateur (107) destiné à combiner le signal d'entrée et le signal pondéré, pour obtenir le signal d'erreur.

**2.** Appareil selon la revendication 1, dans lequel le moyen (103) destiné à limiter est configuré de manière à limiter le signal d'entrée en amplitude.

**3.** Appareil selon la revendication 1 ou 2, dans lequel le moyen (105; 201) destiné à pondérer comprend un multiplicateur destiné à multiplier le signal limité par le facteur de pondération.

**4.** Appareil selon l'une quelconque des revendications 1 à 3 précédentes, dans lequel le facteur de pondération dépend d'une variation d'énergie associée à la limitation.

5. Appareil selon l'une quelconque des revendications 1 à 4 précédentes, comprenant, par ailleurs, un moyen (205) destiné à fournir le facteur de pondération.

6. Appareil selon la revendication 5, dans lequel le moyen (205) destiné à fournir le facteur de pondération est configuré de manière à calculer le facteur de pondération à partir d'un rapport d'énergie ou d'un rapport de puissance entre une énergie ou puissance du signal d'entrée et une énergie ou puissance du signal limité.

7. Appareil selon la revendication 6, dans lequel le moyen (205) destiné à fournir le facteur de pondération est configuré de manière à calculer le facteur de pondération $w_1^\ell$ pour un t-ième signal d'entrée sur base de l'équation suivante:

$$w_1^\ell = \sqrt{\frac{X^{\ell H} X^\ell}{X_c^{\ell H} X_c^\ell}} = \sqrt{L \cdot N \cdot \frac{x^{\ell H} x^\ell}{X_c^{\ell H} X_c^\ell}}$$

où $X^1$ désigne une transformation temps-fréquence du $\ell$-ième signal d'entrée $x^1$, $X_c^\ell$ désigne une transformation temps-fréquence d'un $\ell$-ième signal limité $xc^1$, N désigne le nombre de sous-porteuses, L désigne un taux de suréchantillonnage et H désigne la transposition et la conjugaison.

8. Appareil selon la revendication 6, dans lequel le moyen (205) destiné à fournir le facteur de pondération est configuré de manière à calculer le facteur de pondération $w_2^\ell$ pour un $\ell$-ième signal d'entrée $x^1$ sur base de l'équation suivante:

$$w_2^\ell = \sqrt{\frac{x^{\ell H} x^\ell}{x_c^{\ell H} x_c^\ell}}$$

où $x_c^\ell$ désigne un $\ell$-ième signal limité.

9. Appareil selon la revendication 6, dans lequel le moyen (205) destiné à fournir le facteur de pondération est configuré de manière à calculer le facteur de pondération $w_3^\ell$ à partir d'une valeur prévue du rapport d'énergie sur base de l'équation suivante:

$$w_3^\ell = \sqrt{L \cdot N \cdot \frac{E\{x_c^{\ell H} x_c^\ell\} x^{\ell H} x^\ell}{E\{X_c^{\ell H} X_c^\ell\} x_c^{\ell H} x_c^\ell}}$$

où $x^\ell$ désigne le $\ell$-ième signal d'entrée, $X_c^\ell$ désigne une transformation temps-fréquence d'un $\ell$-ième signal limité $x_c^\ell$, H désigne la transposition et la conjugaison, N désigne le nombre de sous-porteuses, L désigne un taux de suréchantillonnage, et où E désigne l'opération de prévision.

10. Appareil selon la revendication 6, dans lequel le moyen (205) destiné à fournir le facteur de pondération est configuré de manière à calculer le facteur de pondération $w_4^\ell$ à partir d'une valeur prévue du rapport d'énergie sur base de l'équation suivante:

$$w_4^{\ell} = \sqrt{L \cdot N \cdot \frac{E\{x^{\ell H} x^{\ell}\}(\ell)}{E\{X_c^{\ell H} X_c^{\ell}\}(\ell)}}$$

où $x^{\ell}$ désigne le $\ell$-ième signal d'entrée, $X_c^{\ell}$ désigne une transformation temps-fréquence d'un $\ell$-ième signal limité $x_c^{\ell}$, H désigne la transposition et la conjugaison, N désigne le nombre de sous-porteuses, L désigne un taux de suréchantillonnage, et où E désigne l'opération de prévision.

**11.** Appareil selon les revendications 6 à 10, dans lequel le moyen (205) destiné à fournir le facteur de pondération est configuré de manière à pondérer le facteur de pondération par une constante, pour obtenir un autre facteur pondéré comme facteur pondéré.

**12.** Appareil selon la revendication 6, dans lequel le moyen (205) destiné à fournir le facteur de pondération est configuré de manière à déterminer le facteur de pondération à partir d'un produit sur base du signal d'entrée et du signal limité, ou une valeur prévue pour le produit sur base du signal d'entrée et du signal limité.

**13.** Appareil selon la revendication 12, dans lequel le moyen (205) destiné à fournir le facteur de pondération est configuré de manière à déterminer le facteur de pondération à partir d'une partie réelle du produit sur base du signal d'entrée et du signal limité, ou d'une partie réelle de la valeur prévue pour le produit sur base du signal d'entrée et du signal limité.

**14.** Appareil selon la revendication 12 ou 13, dans lequel le moyen (205) destiné à fournir le facteur de pondération est configuré de manière à déterminer le facteur de pondération $w_{freq}^{\ell}$ à partir d'un $\ell$-ième signal d'entrée sur base de l'équation suivante:

$$w_{freq}^{(\ell)} = \frac{\mathrm{Re}\{X^H X_c\}}{X_c^H X_c}$$

où X désigne la représentation spectrale du signal d'entrée, $X_c$ désigne une représentation spectrale du signal limité, ou
où le moyen (205) destiné à fournir un facteur de pondération est configuré de manière à déterminer le facteur de pondération $w_{time}^{(\ell)}$ dans le domaine de temps sur base de l'équation suivante:

$$w_{time}^{(\ell)} = \frac{\mathrm{Re}\{x^H x_c\}}{x_c^H x_c}$$

où x désigne le signal d'entrée dans le domaine du temps, et $X_c$ désigne le signal limité.

**15.** Appareil selon les revendications 12 à 14, dans lequel le moyen (205) destiné à fournir le facteur de pondération est configuré de manière à déterminer le facteur de pondération $w_{aver}^{(\ell)}$ pour un $\ell$-ième signal d'entrée sur base de l'équation suivante:

$$w_{aver}^{(\ell)} = E\left\{w_{freq}^{(\ell)}\right\} = \frac{\mathrm{Re}\left\{E\left\{X^H X_c\right\}\right\}}{E\left\{X_c^H X_c\right\}}$$

où X désigne une représentation spectrale du signal d'entrée, X<sub>c</sub> désigne une représentation spectrale du signal limité, et où H désigne un opérateur hermitien, et où E désigne l'opérateur de prévision.

**16.** Appareil selon la revendication 15, dans lequel le moyen (205) destiné à fournir le facteur de pondération est configuré de manière à déterminer le facteur de pondération $w_{const}^{(\ell)}$ sur base de l'équation suivante:

$$w_{const}^{(\ell)} = k w_{aver}^{(\ell)}$$

où k est un facteur constant.

**17.** Appareil selon les revendications 12 à 16, dans lequel le moyen (205) destiné à fournir le facteur de pondération est configuré de manière à déterminer le facteur de pondération à partir d'une minimisation d'une corrélation croisée entre le signal d'entrée et le signal d'erreur, ou à partir d'une minimisation d'une corrélation croisée entre une représentation spectrale du signal d'entrée et une représentation spectrale du signal d'erreur.

**18.** Appareil selon les revendications 12 à 17, dans lequel le moyen (205) destiné à fournir un facteur de pondération est configuré de manière à déterminer le facteur de pondération en minimisant une énergie d'une représentation spectrale du signal d'erreur.

**19.** Appareil selon l'une quelconque des revendications 1 à 18 précédentes, dans lequel le combinateur (107) comprend un soustracteur destiné à déterminer une différence entre le signal d'entrée et le signal de pondération, pour obtenir le signal d'erreur.

**20.** Appareil selon l'une quelconque des revendications 1 à 19 précédentes, dans lequel le combinateur (107) comprend un premier transformateur temps-fréquence destiné à fournir une représentation spectrale du signal d'entrée, un deuxième transformateur temps-fréquence destiné à fournir une représentation spectrale du signal de pondération, et un soustracteur destiné à déterminer une différence entre la représentation spectrale du signal d'entrée et la représentation spectrale du signal de pondération, pour obtenir le signal d'erreur.

**21.** Appareil selon la revendication 20, dans lequel le premier transformateur temps-fréquence et le deuxième transformateur temps-fréquence sont des transformateurs de Fourier.

**22.** Appareil selon l'une quelconque des revendications 1 à 21 précédentes, dans lequel le combinateur (107) comprend un transformateur de Fourier destiné à fournir une représentation spectrale du signal d'entrée et à fournir une représentation spectrale du signal pondéré, et un soustracteur destiné à déterminer une différence entre la représentation spectrale du signal pondéré et la représentation spectrale du signal d'entrée, pour obtenir le signal d'erreur.

**23.** Appareil pour générer un signal de transmission à partir d'un signal d'entrée, dans lequel le signal d'entrée comprend une crête d'amplitude résultant d'une superposition d'une pluralité de signaux de fréquence due à un aménagement de modulation à porteuses multiples, l'appareil comprenant:

l'appareil pour générer un signal d'erreur à partir du signal d'entrée selon les revendications 1 à 13;
un processeur destiné à traiter le signal d'erreur pour obtenir un signal d'erreur traité; et
un combinateur destiné à combiner un signal d'erreur traité avec le signal d'entrée, pour obtenir le signal de transmission présentant une crête d'amplitude réduite.

**24.** Procédé pour générer un signal d'erreur à partir d'un signal d'entrée, le signal d'entrée comprenant une crête de signal, le signal d'erreur à combiner avec le signal d'entrée pour générer un signal de transmission présentant une crête de signal réduite, le procédé comprenant les étapes suivantes:

limiter le signal d'entrée, pour obtenir un signal limité;
pondérer le signal limité par un facteur de pondération supérieur à 1, pour obtenir un signal pondéré; et
combiner le signal d'entrée et le signal pondéré, pour obtenir le signal d'erreur.

25. Procédé pour générer un signal de transmission à partir d'un signal d'entrée, dans lequel le signal d'entrée comprend une crête d'amplitude résultant d'une superposition d'une pluralité de signaux de fréquence due à un aménagement de modulation à porteuses multiples, le procédé comprenant les étapes suivantes:

générer un signal d'erreur à partir du signal d'entrée selon la revendication 24;
traiter le signal d'erreur, pour obtenir un signal d'erreur traité; et
combiner le signal d'erreur traité avec le signal d'entrée, pour obtenir le signal de transmission présentant une crête d'amplitude réduite.

26. Programme d'ordinateur ayant un code de programme adapté pour réaliser le procédé selon la revendication 24 ou le procédé selon la revendication 25 lorsque le programme est exécuté sur un ordinateur.

FIG 1

FIG 2

Means for providing a weighting factor — 205

Means for distorting — 103

Means for weighting — 201

203

combiner — 107

Error signal

Input signal — 101

FIG 3A

FIG 3C

FIG 3B

FIG 3D

Signal constellation $X_c^o$ of
one QPSK symbol
for CR=8dB

**FIG 4A**

Signal constellation $X_c^o$
for CR=0 dB

**FIG 4B**

Weighted signal
constellation $w_2^o X_c^o$ for CR=0 dB

**FIG 4C**

EP 1 706 975 B1

1500 Data-symbols

1600 IFFT + Over-sampling

$d^0$

$x^0$

1601

$x^l$

1607 Clipping

$w^l$

503

501

$x_c^l$

1605

$-C_c^l$

1615 FFT + Filtering

$C_c^l$

1609 Apply ACE constaints

$C^l$

1617 IFFT + Over-sampling

$c^l$

1611 SGP

$\mu^l$

1619

1613

1621

1623 Impulse-shaping etc.

1625

$l \longrightarrow l+1$

**FIG 5**

FIG 6

FIG 7

EP 1 706 975 B1

FIG 8

FIG 9A

FIG 9B

FIG 9C

FIG 9D

FIG 9E

FIG 9F

FIG 9G

FIG 9H

FIG 10

FIG 11

43

EP 1 706 975 B1

FIG 12A

FIG 12B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S.H. MÜLLER ; R.W. BÄUML ; R.F.H. FISCHER ; J.B. HUBER.** OFDM with Reduced Peak-to-Average Power Ratio by Multiple Signal Representation. *Annals of Telecommunications,* February 1997, vol. 52 (1-2), 1-9
- **S. H. MÜLLER ; J.B. HUBER.** A Comparison of Peak Power Reduction schemes for OFDM. *Proc. Of Globecom,* November 1997, 1-5
- **A.E. JONES ; T.A. WILKINSON ; S.K. BARTON.** Block Coding Scheme for Reduction of Peak to Mean Envelope Power Ratio of Multicarrier Transmission Schemes. *El. Lett,* December 1994, vol. 30 (25), 2098-2099
- **E. LAWREY ; C.J. KIKKERT.** Peak to Average Power Ration Reduction of OFDM Signals Using Peak Reduction Carriers. *Int. Symposium on signal Processing and its applications,* August 1999, 737-740
- **J. TELLADO ; J.M. CIOFFI.** Peak Power Reduction for Multicarrier Transmission. *Mini-Globecom,* 1999
- **H. SCHMIDT ; K.-D. KAMMEYER.** Reducing the Peak to Average Power Ratio of Multicarrier Signals by Adaptive Subcarrier Selection. *Int. Conference on Universal Personal Communications,* January 1998, 933-937
- **L.D. KABULEPA ; T. PIONTECK ; A. GARCIS ; M. GLESNER.** Design Space Exploration for Clipping and Filtering PAPR Reduction Techniques in OFDM Systems. *Proc. Int. OFDM-Workshop,* October 2003, vol. 1, 108-112
- **J. ARMSTRONG.** Peak-to-Average power reduction for OFDM by repeated clipping and frequency domain filtering. *El. Lett.,* February 2003, vol. 38 (5), 246-247
- **H.-G. RYU ; B.-I JIN ; I.-B. KIM.** PAPR Reduction Using Soft Clipping and ACI Rejection in OFDM Systems. *IEEE Trans. On Communications,* February 2002, vol. 48 (1), 17-22
- **M. PAULI ; H.-P. KUCHENBECKER.** On the Reduction of the Out-of-Band Radiation of OFDM-Signals. *Int. Conference on Communications,* 1998, vol. 3, 1304-1308
- **M. LAMPE ; H. ROHLING.** Reducing out-of-band emissions due to nonlinearities in OFDM systems. *Vehicular Technology Conference,* May 1999, vol. 3, 2255-2259

- **A. KATZ.** Linearization: Reducing Distortion in Power Amplifiers. *IEEE Microwave Magazine,* December 2001, vol. 2 (4), 37-49
- **P. ZILLMANN ; H. NUSZKOWSKI ; G.P. FETT-WEIS.** A Novel Receive Algorithm for Clipped OFDM Signals. *Proc. Int. Symp. On Wireless Personal Multimedia Communications,* October 2003, vol. 3, 385-389
- **X, WANG ; T.T. TJHUNG ; C.S. NG.** Reduction of Peak-to-Average Power Ratio of OFDM System Using a Companding Technique. *IEEE Trans. On Broadcasting,* September 1999, vol. 45 (3), 303-307
- **D. KIM ; G.L. STUBER.** Clipping Noise Mitigation for OFDM by Decision-Aided Reconstruction. *IEEE Communications Letters,* January 1999, vol. 3 (1), 4-6
- **J. TELLADO ; L.M.C. HOO ; J.M. CIOFFI.** Maximum-Likelihood Detection of Nonlinearly Distorted Multicarrier Symbols by Iterative Decoding. *IEEE Trans. On Communications,* February 2003, vol. 51 (2), 218-228
- **B.S. KRONGOLD ; D.L. JONES.** PAR reduction in OFDM via Active Constellation Extension. *IEEE Trans. On Broadcasting,* September 2003, vol. 49 (3), 258-268
- **H. ATARASHI ; M. NAKAGAWA.** A Computational Cost Reduction scheme for a Post-Distortion Type Nonlinear Distortion Compensator of OFDM Signals. *IEICE Trans. On communications,* December 1998, vol. E81-B (12), 2334-2342
- **J. ARMSTRONG.** New OFDM Peak-to-Average Power Reduction Scheme. *Vehicular Technology Conference,* 2001, vol. 1, 756-760
- **A. SAUL.** Analysis of Peak Reduction in OFDM Systems Based on Recursive Clipping. *Proc. Int. OFDM-Workshop,* September 2003, vol. 1, 103-107
- **R. DINIS ; A. GUSMAO.** On the Performance Evaluation of OFDM Transmission Using Clipping Techniques. *Vehicular Technology Conference,* September 1999, vol. 5, 2923-2928
- **A. SAUL.** Comparison between Recursive Clipping and Active Constellation Extension for Peak Reduction in OFDM Systems. *Proc. Int. Symp. on Wireless Personal Multimedia Communications,* October 2003, vol. 1, 37-41

- **SAUL.** Comparison between Recursive Clipping and Active Constellation Extension for Peak Reduction in OFDM Systems. *Proc. Int. Symp. On Wireless Personal Multimedia Communications,* October 2003, vol. 1, 37-41